(19) Europäisches Patentamt
European Patent Office
Office européen des brevets

(11) EP 2 816 073 B1

(12) **EUROPEAN PATENT SPECIFICATION**

(45) Date of publication and mention of the grant of the patent:
**19.10.2016 Bulletin 2016/42**

(21) Application number: **13748526.4**

(22) Date of filing: **15.02.2013**

(51) Int Cl.:
***C08J 5/04*** *(2006.01)* ***C08K 7/02*** *(2006.01)*
***C08L 101/00*** *(2006.01)*

(86) International application number:
**PCT/JP2013/053709**

(87) International publication number:
**WO 2013/122209 (22.08.2013 Gazette 2013/34)**

(54) **FIBER-REINFORCED RESIN COMPOSITE BODY, AND REINFORCED MATRIX RESIN FOR FIBER-REINFORCED RESIN**

FASERVERSTÄRKTER HARZVERBUNDKÖRPER UND VERSTÄRKTES MATRIXHARZ FÜR EIN FASERVERSTÄRKTES HARZ

CORPS DE COMPOSITE EN RÉSINE À FIBRE RENFORCÉE, ET RÉSINE À MATRICE RENFORCÉE POUR RÉSINE À FIBRE RENFORCÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2012 JP 2012032702**
**29.03.2012 JP 2012076534**

(43) Date of publication of application:
**24.12.2014 Bulletin 2014/52**

(73) Proprietor: **DIC Corporation**
**Tokyo 174-8520 (JP)**

(72) Inventors:
- **YAMAZAKI Takeshi**
  **Sakura-shi**
  **Chiba 285-8668 (JP)**
- **HARADA Tetsuya**
  **Sakura-shi**
  **Chiba 285-8668 (JP)**
- **IKUMA Takahito**
  **Sakura-shi**
  **Chiba 285-8668 (JP)**
- **TAKIZAWA Hironobu**
  **Sakura-shi**
  **Chiba 285-8668 (JP)**

(74) Representative: **TBK**
**Bavariaring 4-6**
**80336 München (DE)**

(56) References cited:
**EP-A1- 2 623 545**
**WO-A1-2011/115154**
**WO-A1-2012/043558**
**JP-A- 2005 042 283**
**JP-A- 2010 024 413**
**JP-A- 2011 006 609**
**JP-A- 2011 195 609**
**JP-A- 2011 219 571**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 816 073 B1

## Description

### Technical Field

The present invention relates to a fiber-reinforced resin composite and a use of a reinforced matrix resin for a fiber-reinforced resin.

### Background Art

In recent years, a fiber-reinforced resin has drawn attention as a light-weight and high-performance material. Particularly, the resin is expected to be used as a substitute for metals in transport machines such as automobiles or airplanes or in various electronic members.

For the fiber-reinforced resin, carbon fiber or glass fiber is compounded with a synthetic resin so that both the light weight and the strength are mutually established, but the more improvement in the strength has become necessary.

PTL 1 discloses an invention in which a fiber-reinforced resin is compounded with cellulose nanofiber which is nanofiller from natural raw materials derived from plants. By being compounded with the cellulose nanofiber which is obtained by fibrillating cellulose, the fiber-reinforced resin is strengthened.

Meanwhile, in the current technology, in order to micronize cellulose having a large number of hydroxyl groups to a nano-level, the cellulose needs to be fibrillated in water or fibrillated by means of mixing a large amount of water to a resin, so the fibrillated cellulose nanofiber contains a large amount of water (see PTL 2). In order to compound the water-containing fibrillated cellulose nanofiber with various types of resin, it is necessary to perform a step of dehydrating the produced cellulose nanofiber or to remove a solvent after the water is substituted with alcohol. Moreover, since cellulose easily forms intermolecular hydrogen bonds, the fiber agglomerates again during the step of dehydrating cellulose nanofiber and poorly disperses in a resin, and this leads to a problem that the fiber is not easily compounded with the resin.

PTL 3 describes a microfibril forming process where a microfibril is formed in an aqueous dispersion of cellulosic fiber using a high-pressure homogenizer. The aqueous dispersion of microfibril-formed micro cellulosic fiber is substituted with a hydrophilic organic solvent. PTL 4 describes a manufacture of a cellulose-containing thermoplastic resin for molded products. A polyhydric alcohol is further added as a raw material during manufacture of the cellulose-containing thermoplastic resin. Reheating-mixing process is further performed as post process during manufacture of the cellulose-containing thermoplastic resin. The amount of water contained in cellulose is 5-30 %mass. PTL 5 discloses a fibrous composite material containing a cellulose fiber dispersed in a water-insoluble dispersion medium containing a surfactant and a matrix resin. The surfactant forms reversed micelles in the water-insoluble dispersion medium. The cellulose fiber is molded using the cellulose fiber dispersion in the reversed micelle. PTL 6 describes a molding material containing an anion-modified microfibrillated plan fiber obtained by performing anion-modification using carboxylic acid and/or its salt in presence of a base, and a thermosetting resin. Patent Literature

[PTL 1] Japanese Unexamined Patent Application, First Publication No. 2010-24413
[PTL 2] Japanese Unexamined Patent Application, First Publication No. 2005-42283
[PTL 3] JP 2011 006609 A (DAICEL CHEMICAL INDUSTRIES, LTD.) 13 January 2011
[PTL 4] JP 2011 219571 A (MITSUBISHI PAPER MILLS LTD.) 4 November 2011
[PTL5] JP 2011 195609 A (KONICA MINOLTA HOLDINGS, INC.) 6 October 2011
[PTL 6] WO 2011/115154 A1 (KYOTO UNIVERSITY) 22 September 2011


### Summary of Invention

### Technical Problem

The present invention aims to provide a fiber-reinforced resin composite much stronger than conventional fiber-reinforced resins, and a reinforced matrix resin for a fiber-reinforced resin that is for providing the fiber-reinforced resin composite much stronger than fiber-reinforced resins.

### Solution to Problem

As a result of repeated and thorough research, the present inventors found that if cellulose nanofiber, which is obtained by micronizing cellulose directly in a resin for fibrillation without using water or an organic solvent, is used as a reinforcing material, then the strength of a fiber-reinforced resin composite can be enhanced. They also found that the

reinforced matrix resin containing the reinforcing material and a matrix resin is easily compounded with a reinforcing fiber, and as a result of the compounding, an excellent fiber-reinforced resin composite is obtained.

That is, the present invention is to provide a fiber-reinforced resin composite as a fiber-reinforced resin composite (E) containing a fiber-reinforced resin (C) which contains a reinforcing fiber (A), and a matrix resin (B); and a reinforcing material (D),
in which the reinforcing material (D) contains a cellulose nanofiber (F), and the cellulose nanofiber (F) is obtained by micronizing cellulose in a fibrillated resin (G).

The present invention also provides the fiber-reinforced resin composite in which the cellulose nanofiber (F) is a modified cellulose nanofiber (F1) that is obtained by micronizing cellulose in the fibrillated resin (G) and then reacting the cellulose with a cyclic polybasic acid anhydride (J).

The present invention also provides a use of a reinforced matrix resin as a reinforced matrix resin (H) for a fiber-reinforced resin containing a matrix resin (B) and a reinforcing material (D), and
the reinforcing material (D) contains a cellulose nanofiber (F), and the cellulose nanofiber (F) is obtained by micronizing cellulose in a fibrillated resin (G).

The present invention also provides a method for producing a fiber-reinforced resin composite, including:

a step of obtaining a cellulose nanofiber (F) by micronizing cellulose in a fibrillated resin (G);
a step of obtaining a reinforced matrix resin (H) by compounding a reinforcing material (D) which contains the fibrillated resin (G) and the cellulose nanofiber (F) with a matrix resin (B); and
a step of obtaining a fiber-reinforced resin composite (E) by compounding the reinforced matrix resin (H) with a reinforcing fiber (A).

The present invention also provides a method for producing a fiber-reinforced resin composite, including:

a step of obtaining a cellulose nanofiber (F) by micronizing cellulose in a fibrillated resin (G);
a step of obtaining a modified cellulose nanofiber (F1) by reacting hydroxyl groups contained in the cellulose nanofiber (F) with a cyclic polybasic acid anhydride (J) in the fibrillated resin (G);
a step of obtaining a reinforced matrix resin (H) by compounding the fibrillated resin (G) or a modified fibrillated resin (K) obtained by modifying the fibrillated resin (G) with the cyclic polybasic acid anhydride (J) with a reinforcing material (D) containing the modified cellulose nanofiber (F1) and a matrix resin (B); and
a step of obtaining a fiber-reinforced resin composite (E) by compounding the reinforced matrix resin (H) with a reinforcing fiber (A).

Advantageous Effects of Invention

According to the present invention, it is possible to enhance the strength of the fiber-reinforced resin composite (E) by using the cellulose nanofiber (F), which is obtained by micronizing cellulose directly in the fibrillated resin (G) without using water or an organic solvent, as the reinforcing material (D). This is because the cellulose nanofiber (F) is directly fibrillated in the fibrillated resin (G), the cellulose nanofiber (F) in the obtained reinforcing material (D) is not hydrated as it is fibrillated in an aqueous solvent and exhibits a high degree of affinity with respect to a resin. Accordingly, the cellulose nanofiber (F) can be compounded with the matrix resin (B) at a high concentration, and thus the fiber-reinforced resin (C) is effectively reinforced by the cellulose nanofiber (F), whereby the strength of the fiber-reinforced resin composite (E) is enhanced.

Description of Embodiments

Hereinafter, the embodiments of the present invention will be described in detail. The following description is an example of embodiments of the present invention, and the present invention is not limited to the description.

[Reinforcing fiber (A)]

The reinforcing fiber (A) in the present invention may be a resin that is usable for the fiber-reinforced resin (C), and inorganic fiber such as carbon fiber, glass fiber, boron fiber, alumina fiber, and silicon carbide fiber can be used in addition to organic fiber, such as aramid fiber. Among these, carbon fiber and glass fiber are preferable since the range of use thereof in the industrial field is wide. Among these fibers, one kind thereof may be used alone, or plural kinds thereof may be used concurrently.

The reinforcing fiber (A) of the present invention may be an aggregate of fibers or in the form of woven cloth or non-woven cloth. Moreover, the reinforcing fiber (A) may be a bundle of fibers that are arranged in one direction or

in the form of a sheet in which the fiber bundles line up. Furthermore, the reinforcing fiber (A) may have a three-dimensional shape formed by imparting thickness to the aggregate of fibers.

[Matrix resin (B)]

The matrix resin (B) of the present invention is not particularly limited as long as it can be compounded with the reinforcing fiber (A). The matrix resin (B) may be a monomer, an oligomer, or a polymer, and the polymer may be a homopolymer or a copolymer. Moreover, one kind thereof may be used, or plural kinds thereof may be used in combination. In the case of the polymer, any of thermoplastic resins and thermosetting resins can be used.

The thermoplastic resins refer to resins subjected to melt molding by means of heating. Specific examples thereof include a polyethylene resin, a polypropylene resin, a polystyrene resin, a rubber-modified polystyrene resin, an Acrylonitrile-Butadiene-Styrene (ABS) resin, an Acrylonitrile-Styrene (AS) resin, a polymethyl methacrylate resin, an acrylic resin, a polyvinyl chloride resin, a polyvinylidene chloride resin, a polyethylene terephthalate resin, an ethylene vinyl alcohol resin, a cellulose acetate resin, an ionomer resin, a polyacrylonitrile resin, a polyamide resin, a polyacetal resin, a polybutylene terephthalate resin, a polylactic resin, a polyphenylene ether resin, a modified polyphenylene ether resin, a polycarbonate resin, a polysulfone resin, a polyphenylene sulfide resin, a polyetherimide resin, a polyethersulfone resin, a polyarylate resin, a thermoplastic polyimide resin, a polyamideimide resin, a polyether ether ketone resin, a polyketone resin, a liquid crystalline polyester resin, a fluororesin, a syndiotactic polystyrene resin, a cyclic polyolefin resin. One kind of these thermoplastic resins can be used alone, or two or more kinds thereof can be used concurrently.

The thermosetting resins refer to resins having a property of substantially being able to turn into insoluble or unmeltable resins when being cured by heating or by means such as light, UV rays, radiation, or catalyst. Specific examples of such resins include a phenol resin, a urea resin, a melamine resin, a benzoguanamine resin, an alkyd resin, an unsaturated polyester resin, a vinyl ester resin, a diallyl (tere)phthalate resin, an epoxy resin, a silicone resin, a urethane resin, a furan resin, a ketone resin, a xylene resin, a thermosetting polyimide resin. One kind of these thermosetting resins can be used alone, or two or more kinds thereof can be used concurrently. Moreover, when the resin of the present invention contains the thermoplastic resin as a main component, the thermosetting resin may be added in a small amount, within a range that does not deteriorate the properties of the thermoplastic resin. Inversely, when the thermosetting resin is used as a main component, the thermoplastic resin or a monomer such as acryl or styrene may be added in a small amount, within a range that does not deteriorate the properties of the thermosetting resin.

The matrix resin (B) of the present invention may further contain a curing agent.

In the case of an epoxy resin, there are compounds that cause a stoichiometric reaction, such as aliphatic polyamine, aromatic polyamine, dicyandiamide, polycarboxylic acid, polycarboxylic acid hydrazide, acid anhydrides, polymercaptan, and polyphenol, and compounds having catalytic action, such as imidazole, a Lewis acid complex, and an onium salt. When the compounds that cause a stoichiometric reaction are used, curing accelerators, for example, various gamines, imidazole, a Lewis acid complex, an onium salt, or phosphine are mixed in such compounds in some cases.

In the case of a vinyl ester resin and an unsaturated polyester resin, various organic peroxides may be compounded in as a curing agent. Examples of organic peroxides used for curing performed at the room temperature include methyl ethyl ketone peroxide, acetyl acetone peroxide, and these are used concurrently with curing accelerating agents such as metallic soaps like cobalt naphthenate. Examples of organic peroxides used for curing performed by means of heating include t-butyl peroxyisopropyl carbonate, benzoyl peroxide, bis-4-t-butyl cyclohexane dicarbonate, t-butyl peroxy-2-ethyl **hexanate.** One kind of these compounds may be used alone, or two or more kinds thereof may be used concurrently.

The matrix resin (B) may contain various conventionally known additives, within a range that does not diminish the effects of the present invention. Examples of the additives include a hydrolysis inhibitor, a colorant, a flame retardant, an antioxidant, a polymerization initiator, a polymerization inhibitor, a UV absorber, an antistatic agent, a lubricant, a release agent, a defoamer, a leveling agent, a light stabilizer (for example, hindered amine), an antioxidant, an inorganic filler, an organic filler.

[Fiber-reinforced resin (C)]

The fiber-reinforced resin (C) in the present invention is a resin composition containing the reinforcing fiber (A) and the matrix resin (B).

[Reinforcing material (D)]

The reinforcing material (D) in the present invention can reinforce the fiber-reinforced resin (C) by being added to the fiber-reinforced resin (C). The reinforcing material (D) contains the cellulose nanofiber (F). The cellulose nanofiber

(F) contained in the reinforcing material (D) reinforces the fiber-reinforced resin. The cellulose nanofiber (F) is obtained by fibrillating cellulose in the fibrillated resin (G). Unlike other cellulose nanofibers that are fibrillated in water or an organic solvent, the cellulose nanofiber (F) is obtained by being directly fibrillated in the fibrillated resin (G) and is not hydrated as the case where the fiber is fibrillated in an aqueous solvent. Accordingly, the cellulose nanofiber (F) exhibits a high degree of affinity with respect to the matrix resin (B) and thus can be made into a composite at a high concentration. Therefore, the fiber-reinforced resin composite (E) obtained by reinforcing the fiber-reinforced resin (C) with the reinforcing material (D) becomes a resin composite having a high strength.

The reinforcing material (D) in the present invention contains the cellulose nanofiber (F) obtained by fibrillating cellulose in the fibrillated resin (G), but the reinforcing material (D) may further contain the fibrillated resin (G). If a mixture of the cellulose nanofiber (F) obtained by fibrillating cellulose in the fibrillated resin (G) and the fibrillated resin (G) is directly used as the reinforcing material (D), a step of purifying the cellulose nanofiber (F) becomes unnecessary, and a degree of affinity of the mixture with respect to the matrix resin increases. Accordingly, the mixture is preferable as the reinforcing material (D).

[Cellulose nanofiber (F)]

The cellulose nanofiber (F) in the present invention is obtained by micronizing various types of cellulose, and can reinforce the fiber-reinforced resin composite (E) by being mixed in the fiber-reinforced resin (C), in the form of the reinforcing material (D) containing the cellulose nanofiber (F).

The cellulose in the present invention may be cellulose usable as a material to be micronized. As the material, it is possible to use, for example, pulp, cotton, paper, recycled cellulose fiber such as rayon, cupra, polynosic, and acetate, cellulose produced from bacteria, cellulose derived from animals such as ascidian.

Moreover, the surface of the above cellulose may be optionally treated by chemical modification.

As pulp, both the wood pulp and non-wood pulp can be preferably used. As the wood pulp, there are mechanical pulp and chemical pulp, and among these, chemical pulp containing a small amount of lignin is preferable. The chemical pulp includes, for example sulfide pulp, craft pulp, alkaline pulp, and any of these can be preferably used. As the non-wood pulp, any of straw, bagasse, kenaf, bamboo, reed, paper mulberry, and flax can be used.

Cotton is a plant that is mainly used as fiber for garment, and any of raw cotton, cotton fiber, and cotton cloth can be used.

Paper is made of fiber extracted from pulp, and used paper such as newspaper, waste milk pack, or printed paper can be preferably used.

Moreover, as the cellulose which is a material to be micronized, cellulose powder obtained by crushing cellulose and having a certain particle size distribution may be used. Examples thereof include KC FLOCK manufactured by NIPPON PAPER INDUSTRIES CO., LTD. CHEMICAL DIVISION, CEOLUS manufactured by Asahi Kasei Chemicals Corporation, AVICEL manufactured by FMC Corporation.

[Fibrillated resin (G)]

The fibrillated resin (G) in the present invention is a polyester-based resin (G1), a vinyl resin (G2), or a modified epoxy resin (G3).

[Polyester-based resin (G1)]

The polyester-based resin (G1) in the present invention is a polyester resin which is obtained by reacting one, two or more kinds of polyols represented by the following General formula (1) with one, two or more kinds of polycarboxylic acids represented by the following General formula (2).

A-(OH)m ··· (1)

[In the formula, A represents an aliphatic hydrocarbon group having 1 to 20 carbon atoms that may contain an oxygen atom or an aromatic group or a heterocyclic aromatic group that may have a substituent. m represents an integer of 2 to 4.]

B-(COOH)n ··· (2)

[In the formula, B represents an aliphatic hydrocarbon group having 1 to 20 carbon atoms or an aromatic group or a heterocyclic aromatic group that may have a substituent. n represents an integer of 2 to 4.]

Examples of the polyol represented by General formula (1) include ethylene glycol, propylene glycol, 1,3-butanediol, 1,4-butanediol, pentyl glycol, neopentyl glycol, 1,5-pentanediol, 1,6-hexanediol, 1,7-heptanediol, 1,8-octanediol, 1,9-nonanediol, 1,10-decanediol, 1,11-undecanediol, 1,12-dodecanedial, diethylene glycol, triethylene glycol, tetraethylene glycol, polyethylene glycol, dipropylene glycol, polypropylene glycol, 2-methyl-1,3-propanediol, 2-butyl-2-ethyl-1,3-propanediol, 2-methyl-1,4-butanediol, 2-ethyl-1,4-butanediol, 2-methyl-1,3-propanediol, 3-methyl-1,5-pentanediol, 3-methyl-1,5-heptanediol, hydrogenated bisphenol A, an adduct of bisphenol A with propylene oxide or ethylene oxide, 1,2,3,4-tetrahydroxybutane, glycerin, trimethylolpropane, 1,3-propanediol, 1,2-cyclohexane glycol, 1,3-cyclohexane glycol, 1,4-cyclohexane glycol, 1,4-cyclohexane dimethanol, p-xylene glycol, bicyclohexyl-4,4'-diol, 2,6-decalin glycol, 2,7-decalin glycol, ethylene glycol carbonate, glycerin, trimethylolpropane, pentaerythritol.

The polycarboxylic acids represented by General formula (2) include unsaturated dibasic acids and anhydrides thereof, and examples thereof include maleic acid, maleic anhydride, fumaric acid, itaconic acid, citraconic acid, chloromaleic acid, and esters of these; halogenated maleic anhydride; and $\alpha,\beta$,-unsaturated dibasic acid such as aconitic acid or $\beta,\gamma$-unsaturated dibasic acid such as dihydromuconic acid. Moreover, the saturated dibasic acid and anhydrides thereof include, for example, phthalic acid, phthalic anhydride, halogenated phthalic anhydride, isophthalic acid, terephthalic acid, nitrophthalic acid, tetrahydrophthalic acid, tetrahydrophthalic anhydride, endomethylene tetrahydrophthalic anhydride, halogenated phthalic anhydride and esters of these. Examples thereof include hexahydrophthalic acid, hexahydrophthalic anhydride, hexahydroterephthalic acid, hexahydroisophthalic acid, 1,4-cyclohexane dicarboxylic acid, 1,3-cyclohexane dicarboxylic acid, methyl hexahydrophthalate, HET acid, 1,1-cyclobutane dicarboxylic acid, oxalic acid, succinic acid, succinic anhydride, malonic acid, glutaric acid, adipic acid, azelaic acid, pimelic acid, suberic acid, azelaic acid, sebacic acid, 1,12-dodecanedioic acid, 2,6-naphthalene dicarboxylic acid, 2,7-naphthalene dicarboxylic acid, 2,3-naphthalene dicarboxylic acid, 2,3-naphthalene dicarboxylic anhydride, 4,4'-biphenyl dicarboxylic acid, dialkyl esters of these.

Furthermore, a monol, a monovalent carboxylic acid, and hydroxycarboxylic acid may be used in addition to the above polyols and polycarboxylic acids, within a range that substantially does not deteriorate the properties thereof.

Examples of the monol include methanol, ethanol, propanol, isopropanol, butanol, isobutanol, 2-butanol, 3-butanol, n-amyl alcohol, n-hexanol, isohexanol, n-heptanol, isoheptanol, n-octanol, 2-ethylhexanol, isooctanol, n-nonanol, isononanol, n-decanol, isodecanol, isoundecanol, lauryl alcohol, cetyl alcohol, decyl alcohol, undecyl alcohol, tridecyl alcohol, benzyl alcohol, stearyl alcohol, and one, two or more kinds of these may be used.

Examples of the monovalent carboxylic acid include benzoic acid, heptanoic acid, nonanoic acid, caprylic acid, nonanoic acid, capric acid, undecylic acid, lauric acid,
and one, two or more kinds of these may be used.

Examples of the hydroxycarboxylic acid include lactic acid, glycolic acid, 2-hydroxy-n-butyric acid, 2-hydroxycaproic acid, 2-hydroxy-3,3-dimethyl butyrate, 2-hydroxy-3-methyl butyrate, 2-hydroxyisocaproic acid, and p-hydroxybenzoic acid, and one, two or more kinds of these may be used.

Furthermore, as the polyester-based resin (G1) in the present invention, a modified polyester resin obtained by modifying the above polyester resin may be used. Examples of the modified polyester resin include urethane-modified polyester, acryl-modified polyester, epoxy-modified polyester, silicone-modified polyester.

As the polyester-based resin (G1) in the present invention, either linear polyester or multi-branched polyester may be used.

In the polyester-based resin (G1) of the present invention, the concentration of ester groups is preferably 6.0 mmol/g or higher, more preferably from 6.0 mmol/g to 14 mmol/g, even more preferably from 6.0 mmol/g to 20 mmol/g, and particularly preferably from 6.0 mmol/g to 30 mmol/g.

Moreover, it is preferable that the concentration of ester groups be 6.0 mmol/g or higher and the acid value be 10 KOH mg/g or higher.

The acid value is more preferably from 10 KOH mg/g to 100 KOH mg/g, even more preferably from 10 KOH mg/g to 200 KOH mg/g, and particularly preferably from 10 KOH mg/g to 300 KOH mg/g.

Further, it is preferable that the concentration of ester groups be 6.0 mmol/g or higher and the hydroxyl value be 10 or higher.

The hydroxyl value is more preferably from 10 KOH mg/g to 500 KOH mg/g, even more preferably from 10 KOH mg/g to 800 KOH mg/g, and particularly preferably from 10 KOH mg/g to 1,000 KOH mg/g.

In addition, in the polyester-based resin of the present invention, it is particularly preferable that the concentration of ester groups be 6.0 mmol/g or higher, the acid value be 10 KOH mg/g or higher, and the hydroxyl value be 10 KOH mg/g or higher.

In the present invention, one kind of the polyester-based resin (G1) may be used alone, or plural kinds thereof may be used in combination.

[Vinyl resin (G2)]

The vinyl resin (G2) in the present invention is a polymer or a copolymer of vinyl monomers, and the vinyl

monomers are not particularly limited. Preferable examples of the vinyl monomers include (meth)acrylic acid ester derivatives, vinyl ester derivatives, maleic acid diester derivatives, (meth)acrylamide derivatives, styrene derivatives, vinyl ether derivatives, vinyl ketone derivatives, olefin derivatives, maleimide derivatives, and (meth)acrylonitrile. Among vinyl resins, (meth)acrylic resins obtained by polymerizing (meth)acrylic acid ester derivatives are particularly preferable.

Hereinafter, preferable examples of those vinyl monomers will be described. Examples of the (meth)acrylic acid ester derivatives include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, amyl (meth)acrylate, n-hexyl (meth)acrylate, cyclohexyl (meth)acrylate, t-butylcyclohexyl (meth)acrylate, 2-ethylhexyl (meth)acrylate, t-octyl (meth)acrylate, dodecyl (meth)acrylate, octadecyl (meth)acrylate, acetoxyethyl (meth)acrylate, phenyl (meth)acrylate, 2-hydroxyethyl (meth)acrylate, (meth)acrylic acid-2-hydroxypropyl, (meth)acrylic acid-3-hydroxypropyl, (meth)acrylic acid-4-hydroxybutyl, 2-methoxyethyl (meth)acrylate, 2-ethoxyethyl (meth)acrylate, 2-(2-methoxyethoxy)ethyl (meth)acrylate, 3-phenoxy-2-hydroxypropyl (meth)acrylate, (meth)acrylic acid-2-chloroethyl, glycidyl (meth)acrylate, (meth)acrylic acid-3,4-epoxycyclohexylmethyl, vinyl (meth)acrylate, (meth)acrylic acid-2-phenylvinyl, (meth)acrylic acid-1-propenyl, allyl (meth)acrylate, (meth)acrylic acid-2-allyloxyethyl, propargyl (meth)acrylate, benzyl (meth)acrylate, (meth)acrylic acid diethylene glycol monomethyl ether, (meth)acrylic acid diethylene glycol monoethyl ether, (meth)acrylic acid triethylene glycol monomethyl ether, (meth)acrylic acid triethylene glycol monoethyl ether, (meth)acrylic acid polyethylene glycol monomethyl ether, (meth)acrylic acid polyethylene glycol monoethyl ether, β-phenoxyethoxyethyl (meth)acrylate, nonylphenoxy polyethylene glycol (meth)acrylate, dicyclopentenyl (meth)acrylate, dicyclopentenyloxyethyl (meth)acrylate, trifluoroethyl (meth)acrylate, octafluoropentyl (meth)acrylate, perfluorooctylethyl (meth)acrylate, dicyclopentanyl (meth)acrylate, tribromophenyl (meth)acrylate, tribromophenyloxyethyl (meth)acrylate, (meth)acrylic acid-γ-butyrolactone.

Examples of the vinyl ester derivatives include vinyl acetate, vinyl chloroacetate, vinyl propionate, vinyl butyrate, vinyl methoxyacetate, vinyl benzoate.

Examples of the maleic acid diester derivatives include dimethyl maleate, diethyl maleate, dibutyl maleate.

Examples of the fumaric acid diester derivatives include dimethyl fumarate, diethyl fumarate, dibutyl fumarate.

Examples of the itaconic acid diester derivatives include dimethyl itaconate, diethyl itaconate, dibutyl itaconate.

Examples of the (meth)acrylamide derivatives include (meth)acrylamide, N-methyl(meth)acrylamide, N-ethyl(meth)acrylamide, N-propyl(meth)acrylamide, N-isopropyl(meth)acrylamide, N-n-butylacryl(meth)amide, N-t-butyl(meth)acrylamide, N-cyclohexyl(meth)acrylamide, N-(2-methoxyethyl)(meth)acrylamide, N,N-dimethyl(meth)acrylamide, N,N-diethyl(meth)acrylamide, N-phenyl(meth)acrylamide, N-nitrophenylacrylamide, N-ethyl-N-phenylacrylamide, N-benzyl(meth)acrylamide, (meth)acryloyl morpholine, diacetone acrylamide, N-methylol acrylamide, N-hydroxyethyl acrylamide, vinyl (meth)acrylamide, N,N-diallyl(meth)acrylamide, N-allyl(meth)acrylamide.

Examples of the styrene derivatives include styrene, methyl styrene, dimethyl styrene, trimethyl styrene, ethyl styrene, isopropyl styrene, butyl styrene, hydroxystyrene, methoxystyrene, butoxystyrene, acetoxystyrene, chlorostyrene, dichlorostyrene, bromostyrene, chloromethyl styrene, α-methylstyrene.

Examples of the vinyl ether derivatives include methyl vinyl ether, ethyl vinyl ether, 2-chloroethyl vinyl ether, hydroxyethyl vinyl ether, propyl vinyl ether, butyl vinyl ether, hexyl vinyl ether, octyl vinyl ether, methoxyethyl vinyl ether, phenyl vinyl ether.

Examples of the vinyl ketone derivatives include methyl vinyl ketone, ethyl vinyl ketone, propyl vinyl ketone, phenyl vinyl ketone.

Examples of the olefin derivatives include ethylene, propylene, isobutylene, butadiene, isoprene.

Examples of the maleimide derivatives include maleimide, butyl maleimide, cyclohexyl maleimide, phenyl maleimide.

In addition, (meth)acrylonitrile, heterocyclic groups obtained as a result of substitution of a vinyl group (for example, vinylpyridine, N-vinylpyrrolidone, and vinyl carbazole), N-vinylformamide, N-vinylacetamide, N-vinylimidazole, vinyl caprolactone can also be used.

[Functional group]

It is preferable for the vinyl resin (G2) in the present invention to have a functional group, since it improves physical properties of a molded article, such as mechanical properties, by the interaction between a diluent resin and the functional group. Specific examples of the functional group include a halogen group (fluorine or chlorine), a hydroxyl group, a carboxyl group, an amino group, a silanol group, a cyano group, and the vinyl resin may contain plural kinds of these functional groups.

The vinyl resin (G2) can be obtained by heating the above vinyl monomer in a reaction vessel in the presence of a polymerization initiator and optionally allowing the resultant to mature. The reaction conditions vary with the type of the polymerization initiator and the solvent for example. However, the reaction temperature is from 30°C to 150°C and preferably from 60°C to 120°C. The polymerization may be performed in the presence of an unreactive solvent.

Examples of the polymerization initiator include peroxides such as t-butyl peroxybenzoate, di-t-butyl peroxide,

cumene perhydroxide, acetyl peroxide, benzoyl peroxide, and lauroyl peroxide; azo compounds such as azobisisobutylnitrile, azobis-2,4-dimethylvaleronitrile, and azobiscyclohexanecarbonitrile,

Examples of the unreactive solvent include aliphatic hydrocarbon-based solvents such as hexane and mineral spirits; aromatic hydrocarbon-based solvents such as benzene, toluene, and xylene; ester-based solvents such as butyl acetate; alcohol-based solvents such as methanol and butanol; non-protonic polar solvents such as dimethyl formamide, dimethyl sulfoxide, and N-methylpyrrolidone.

One kind of these solvents may be used alone, or plural kinds thereof may be used concurrently.

In the present invention, one kind of the vinyl resin (G2) may be used alone, or plural kinds thereof may be used in combination.

Moreover, the vinyl resin (G2) of the present invention may be a linear or branched polymer. When the vinyl resin (G2) is a branched polymer, it may be in the form of a comb or a star.

[Molecular weight]

The molecular weight of the vinyl resin used in the present invention is preferably 3,000 or less in terms of a number average molecular weight. Although the reason is unclear, it is assumed that if the number average molecular weight is 3,000 or less, the affinity of the resin with cellulose fiber may be improved.

[Acid value]

When the number average molecular weight of the vinyl resin (G2) in the present invention is 3,000 or less, it is more preferable for the acid value to be 30 KOH mg/g or higher and less than 60 KOH mg/g.

[Hydroxyl value]

When the number average molecular weight of the vinyl resin (G2) in the present invention is 3,000 or less, it is preferable for the hydroxyl value to be 30 KOH mg/g or higher, and more preferable to be 50 KOH mg/g or higher.

When the number average molecular weight of the vinyl resin (G2) in the present invention is 3,000 or less, it is particularly preferable for the acid value to be 30 KOH mg/g or higher and less than 60 KOH mg/g and for the hydroxyl value to be 30 KOH mg/g or higher.

[Modified epoxy resin (G3)]

The modified epoxy resin (G3) in the present invention is a modified epoxy resin (G3) which has an epoxy group and a hydroxyl value of 100 mg KOH/g or higher. The modified epoxy resin (G3) can be obtained by causing a reaction between an epoxy resin and a compound (g) having a carboxyl group or an amino group.

[Epoxy resin]

The epoxy resin used in the present invention is not particularly limited in
terms of the structure, as long as it is a compound having an epoxy group in the molecule and generates the modified epoxy resin (G3) having a hydroxyl value of 100 mg KOH/g or higher by reacting with the compound (g) having a carboxyl group or an amino group that will be described later. Examples of the epoxy resin include polyvalent epoxy resins such as a bisphenol A-type epoxy resin, a bisphenol F-type epoxy resin, a bisphenol AD-type epoxy resin, a bisphenol S-type epoxy resin, a phenol novolac-type epoxy resin, a cresol novolac-type epoxy resin, a p-tert-butylphenol novolac-type epoxy resin, a nonylphenol novolc-type epoxy resin, and a t-butyl catechol-type epoxy resin. Examples of monovalent epoxy resins include condensates of epihalohydrin with aliphatic alcohols such as butanol, aliphatic alcohols having 11 to 12 carbon atoms, or monovalent phenols such as phenol, p-ethylphenol, o-cresol, m-cresol, p-cresol, p-tert-butylphenol, s-butylphenol, nonylphenol, and xylenol; condensates of epihalohydrin with monovalent carboxyl groups such as neodecanoic acid. Examples of glycidyl amine include condensates of diaminodiphenyl methane with epihalohydrin. Examples of polyvalent aliphatic epoxy resins include polyglycidyl ethers of vegetable oil such as soybean oil and castor oil. Examples of polyvalent alkylene glycol-type epoxy resins include condensates of epihalohydrin with ethylene glycol, propylene glycol, 1,4-butanediol, 1,6-hexanediol, glycerin, erythritol, polyethylene glycol, polypropylene glycol, polytetramethylene ether glycol, and trimethylolpropane; aqueous epoxy resins disclosed in Japan Unexamined Patent Application, First Publication No. 2005-239928. and the like. One kind of these may be used, or two or more kinds thereof may be used concurrently.

An organic solvent, or an unreactive diluent may be optionally added to the epoxy resin so as to liquefy the resin or decrease the viscosity of the resin.

[Compound (g) having carboxyl group or amino group]

In the present invention, the compound (g) having a carboxyl group or an amino group may be a compound that generates the modified epoxy resin (G3) having a hydroxyl value of 100 mg KOH/g or higher by reacting with the above epoxy resin. As such a compound, one or more kinds among a compound (g1) having a carboxyl group, a compound (g2) having an amino group, and a compound (g3) having a carboxyl group and an amino group can be used.
Moreover, among compounds (g) having a carboxyl group or an amino group, a compound (g4) that further includes a hydroxyl group in addition to a carboxyl group or an amino group is particularly preferable since this compound can make the modified epoxy resin (G3) obtain a high hydroxyl value when reacting with the epoxy compound (B).

[Compound (g1) having a carboxyl group]

n the present invention, the compound (g1) having a carboxyl group is a compound having one or more carboxyl groups. Specific examples of the compound having one carboxyl group include fatty acids such as formic acid, acetic acid, propionic acid, butanoic acid, pentanoic acid, hexanoic acid, heptanoic acid, octanoic acid, nonanoic acid, decanoic acid, chloroacetic acid, trifluoroacetic acid, isopropyl acid, isostearic acid, neodecanoic acid; aromatic carboxylic acid such as benzoic acid, methyl benzoate, dimethyl benzoate, trimethyl benzoate, phenyl acetate, 4-isopropylbenzoic acid, 2-phenylpropanoic acid, 2-phenylacrylic acid, 3-phenylpropanoic acid, and cinnamic acid. Specific examples of the compound having two or more carboxyl groups include carboxylic acids such as succinic acid, adipic acid, terephthalic acid, isophthalic acid, and pyromellitic acid and anhydrides of these. The examples also include maleic acid, maleic anhydride, fumaric acid, itaconic acid, citraconic acid, chloromaleic acid, and esters of these; halogenated maleic anhydride;
and $\alpha,\beta$-unsaturated dibasic acid such as aconitic acid or $\beta,\gamma$-unsaturated dibasic acid such as dihydromuconic acid. Moreover, examples of the saturated dibasic acid and anhydrides thereof include phthalic acid, phthalic anhydride, halogenated phthalic anhydride, isophthalic acid, terephthalic acid, nitrophthalic acid, tetrahydrophthalic acid, tetrahydrophthalic anhydride, endomethylene tetrahydrophthalic anhydride, halogenated phthalic anhydride and esters of these.
Examples thereof include hexahydrophthalic acid, hexahydrophthalic anhydride, hexahydroterephthalic acid, hexahydroisophthalic acid, 1,4-cyclohexane dicarboxylic acid, 1,3-cyclohexane dicarboxylic acid, methyl hexahydrophthalate, HET acid, 1,1-cyclobutane dicarboxylic acid, oxalic acid, succinic acid, succinic anhydride, malonic acid, glutaric acid, adipic acid, azelaic acid, pimelic acid, suberic acid, azelaic acid, sebacic acid, 1,12-dodecanedioic acid, 2,6-naphthalene dicarboxylic acid, 2,7-naphthalene dicarboxylic acid, 2,3-naphthalene dicarboxylic acid, 2,3-naphthalene dicarboxylic anhydride, 4,4'-biphenyl dicarboxylic acid.

[Compound (g2) having amino group]

In the present invention, the compound (g2) having an amino group is a compound having one or more amino groups. Specific examples of the compound having one amino group include methylamine, ethylamine, dimethylamine, diethylamine, propylamine, butylamine, N,N-dimethyl-2-propanamine, aniline, toluidine, 2-aminoanthracene. Examples of the compound having two or more amino groups include ethylene diamine, 1,3-propanediamine, 1,4-butanediamine, 1,6-hexamethylenediamine, 1,4-cyclohexanediamine, 3-aminomethyl-3,5,5-trimethylcyclohexylamine, piperazine, 2,5-dimethylpiperazine, isophorone diamine, 4,4'-cyclohexylmethanediamine, norbornane diamine, hydrazine, diethylene triamine, triethylene triamine, 1,3-bis(aminomethyl)cyclohexane, xylylene diamine.

[Compound (g3) having carboxyl group and amino group]

In the present invention, the compound (g3) having a carboxyl group and a amino group is a compound having one or more carboxyl groups and amino groups. Typical examples thereof include amino acids, and the compound may further include a hydroxyl group. Specific examples thereof include alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, aminobutyric acid, theanine, tricholomic acid, kainic acid.

[Compound (g4) further including hydroxyl group in addition to carboxyl group or amino group]

The compound (g4) further including a hydroxyl group in addition to a carboxyl group or an amino group is a compound further including one or more hydroxyl groups in addition to a carboxyl group or an amino group. Specific examples thereof include glycolic acid, glyceric acid, hydroxypropionic acid, hydroxybutyric acid, malic acid, 2,3-dihydroxybutanedioic acid, citric acid, isocitric acid, mevalonic acid, pantoic acid, ricinoleic acid, dimethylol propionic acid, dimethylol butanoic acid, dihydroxyphenyl propanoate, mandelic acid, benzilic acid, hydroxymethylamine, hydroxyethylamine, hydroxypropylamine.

[Production of modified epoxy resin (G3)]

In the present invention, the modified epoxy resin (G2) having a hydroxyl value of 100 mg KOH /g or higher can be obtained by causing a reaction between an epoxy group of an epoxy resin and a carboxyl group or an amino group of the compound (g) having the carboxyl group or the amino group. If the hydroxyl value is lower than 100 mg KOH/g, this is not preferable since the affinity of the resin with cellulose decreases, and the fibrillation for forming cellulose nanofiber is not easily performed. The reaction ratio between the epoxy group and the carboxyl group or the amino group may be arbitrarily set such that the hydroxyl value becomes 100 mg KOH/g or higher and the epoxy group remains in a desired amount.

Regarding the amount of the epoxy group in the modified epoxy resin (G3), it is preferable that the number of the epoxy group per molecule be 0.3 or greater, more preferably 0.5 or greater, and most preferably 1 or greater.

The modified epoxy resin (G3) can be produced without using a solvent or produced in a solvent. It is preferable that the resin be produced by a solvent-free reaction that does not require removal of a solvent.

The solvent used for polymerization is not particularly limited, and examples thereof include methanol, ethanol, isopropanol, 1-butanol, tert-butanol, isobutanol, diacetone alcohol, acetone, methyl ethyl ketone, diethyl ketone, methyl isobutyl ketone, cyclohexanone, dibutylether, tetrahydrofuran, dioxane, ethylene glycol monomethyl ether, diethylene glycol monomethyl ether, diethylene glycol monoethyl ether, diethylene glycol diethyl ether, butyl cellosolve, toluene, xylene, ethyl acetate, isobutyl acetate. One kind of these solvent may be used alone, or the solvents may be used by being mixed with each other.

Moreover, as the reaction catalyst, a Lewis acid catalyst or a Lewis base catalyst may be used. Specific examples thereof include boron trifluoride, benzyltrimethyl ammonium chloride, dimethylaminopyridine, pyridine, 8-diazabicyclo[5.4.0]undec-7-ene, triphenylphosphine.

The reaction temperature is preferably between the room temperature and 200°C.

[Micronization of cellulose in fibrillated resin (G)]

In the present invention, the cellulose nanofiber (F) is micronized in the fibrillated resin (G). The cellulose can be micronized by means of adding cellulose in the fibrillated resin (G) and mechanically applying a shear force thereto. The shear force can be applied using means such as a bead mill, an ultrasonic homogenizer, extruders such as a single-screw extruder and a double-screw extruder, and known kneading machines such as a Bunbury mixer, a grinder, a pressurizing kneader, and two rolls. Among these, it is preferable to use a pressurizing kneader, in view of obtaining a stabilized shear force even in a resin having high viscosity.

By the above technique, cellulose becomes cellulose nanofiber. In the method of micronization of the present invention, for example, the cellulose can be micronized from 100 nm to 1,000,000 nm in a long axis direction and from 5 nm to 1,000 nm in a short axis direction.

In the present invention, the ratio between the fibrillated resin (G) and cellulose can be arbitrarily changed. In order to enhance the reinforcing effect of the resin, it is better to increase beforehand the cellulose concentration to some extent based on the fibrillated resin (G) such that the cellulose is compounded with the fiber-reinforced resin (C) after being micronized. On the other hand, if the proportion of the fibrillated resin (G) is too low, the effect of sufficiently micronizing cellulose cannot be obtained. The proportion of the cellulose is from 10% by mass to 90% by mass, preferably from 30% by mass to 70% by mass, and more preferably from 40% by mass to 60% by mass, based on the total amount of the fibrillated resin (G) and the cellulose.

[Modified cellulose nanofiber (F1)]

In the present invention, the cellulose nanofiber (F) may be the modified cellulose nanofiber (F1) which is obtained by producing the cellulose nanofiber (F) by means of micronizing cellulose in the fibrillated resin (G) and then adding the cyclic polybasic acid anhydride (J) thereto to cause a reaction between hydroxyl groups contained in the cellulose nanofiber (F) and the cyclic polybasic acid anhydride (J) in the fibrillated resin (G).

The use of the modified cellulose nanofiber (F1) of the present invention is preferable since the affinity thereof with the resin increases when the nanofiber is used to form a resin composition.

Examples of the cyclic polybasic acid anhydride (J) in the present invention include compounds represented by the following Formula (1).

[Chem. 1]

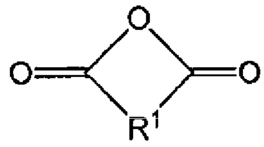

··· (1)

(In Formula (1), $R^1$ represents a linear or branched alkylene or alkenylene group having 15 or less carbon atoms or a substituent having a cyclic structure. Moreover, cyclic acid anhydrides may bind to each other through a substituent to form a multimer.)

Specifically, the following compounds are exemplified.

Examples of a compound having the linear or branched alkylene or alkenylene group represented by $R^1$ include malonic anhydride, succinic anhydride, glutaric anhydride, adipic anhydride, pimelic anhydride, suberic anhydride, azelaic anhydride, sebacic anhdyride, and maleic anhydride.

Examples of the substituent having a cyclic structure that is represented by $R^1$ include rings consisting of 5 to 10 members. The substituent may have a polycyclic structure having plural cyclic structures or may be an aromatic ring. For example, in the case of a 6-membered ring, the following skeletons are exemplified.

[Chem. 2]

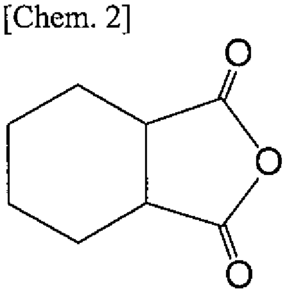

[Chem. 3]

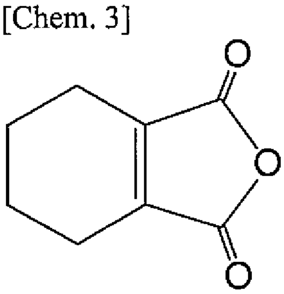

[Chem. 4]

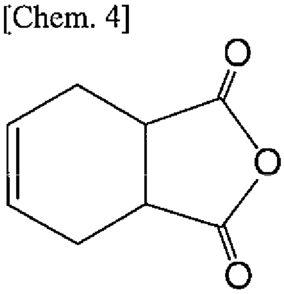

[Chem. 5]

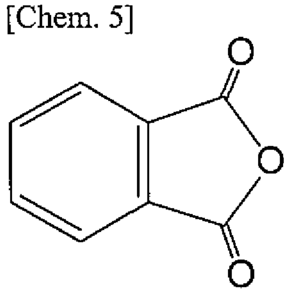

Specific exampls of the compound include hexahydrophthalic anhydride, methyl hexahydrophthalic anhydride, tetrahydrophthalic anhydride, methyl tetrahydrophthalic anhydride, cis-4-cyclohexene-1,2-dicarboxylic anhydride, 4-methyl-4-cyclohexene-1,2-dicaxboxylic anhydride, methyl butenyl tetrahydrophthalic anhydride, phthalic anhydride, trimellitic anhydride, pyromellitic anhydride, methyl endomethylene tetrahydrophthalic anhydride, endomethylene tetrahydrophthalic anhydride.

Moreover, in Formula (1), $R^1$ may form a multimer in a manner in which cyclic acid anhydrides bind to each other through a substituent. Specific examples thereof include a structure ofbenzophenone tetracarboxylic anhydride shown below.

[Chem. 6]

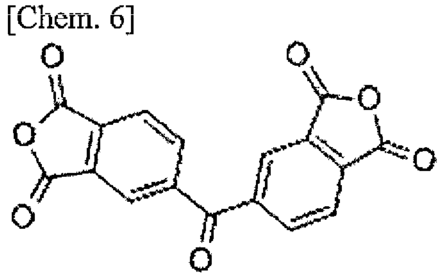

[Reaction between cellulose nanofiber (F) and cyclic polybasic acid anhydride (J)]

When the cellulose nanofiber (F), which is obtained by micronizing cellulose in the fibrillated resin (G), is reacted with the cyclic polybasic acid anhydride (J), the cyclic polybasic acid anhydride (J) may be added to a kneaded material containing the fibrillated resin (G) and the cellulose nanofiber (F), and then hydroxyl groups contained in the cellulose nanofiber (F) may be reacted with the cyclic polybasic acid anhydride (J) by conventionally used methods. Specifcally, the reactants may be mixed while being heated at a temperature of about 60°C to 140°C, and instruments used for dispersing, stirring, or kneading, such as various kneaders, various mixers, various mills, various homogenizers, dissolvers, grinders, and various extruders, can be preferably used.

If the acceleration of the reaction is necessary between hydroxyl groups contained in the cellulose nanofiber (F) and the cyclic polybasic acid anhydride (J), then a catalyst can be used. As the catalyst, for example, basic catalysts, catalysts for addition-esterification can be used, and examples thereof include sodium carbonate, dimethylbenzylamine, tetramethyl ammonium chloride, pyridine.

[Mixing ratio between cellulose nanofiber (F) and cyclic polybasic acid anhydride (J)]

In the present invention, the mixing ratio between the cellulose nanofiber (F) and the cyclic polybasic acid anhydride (J) can be arbitrarily set within a range that does not diminish the effects of the present invention. However, provided that the amount of hydroxyl groups of the cellulose nanofiber is X mol, the amount of hydroxyl groups in the fibrillated resin is Y mol, and the amount of acid anhydride groups of the cyclic polybasic acid anhydride (J) is Z mol, the value of (Z - Y)/X is preferably between 0.1 and 10, more preferably between 0.2 and 7, and most preferably between 0.3 and 5.

[Modified cellulose nanofiber (F1)]

By the above step, the modified cellulose nanofiber (F1) of the present invention can be obtained. The modified cellulose nanofiber (F1) in the present invention is obtained by causing a reaction between hydroxyl groups contained in the cellulose nanofiber (F) and the cyclic polybasic acid anhydride (J) and has a functional group as shown in General

formula (2) described below.

[Chem. 7]

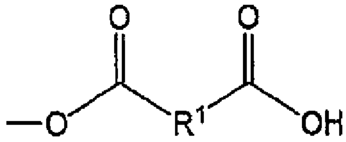

... (2)

(In Formula (2), $R^1$ represents a linear or branched alkylene or alkenylene group having 15 or less carbon atoms or a substituent having a cyclic structure. Moreover, cyclic acid anhydrides may bind to each other through a substituent to form a multimer.)

The number of substituents of the functional group as shown in General formula (4) in the modified cellulose nanofiber (F1) is preferably between 0.1 mol and 1.0 mol, more preferably between 0.2 mol and 0.7 mol, and most preferably between 0.2 mol and 0.5 mol, per 1 mol of a glucose unit of the cellulose nanofiber (F). If the number of substituents is small, a modifying effect is not obtained, and if the number is too large, the modified cellulose nanofiber (F1) cannot retain the fibrous shape, so the effect thereof as fiber is not obtained.

[Additives for reinforcing material (D)]

The cellulose nanofiber (F) having been micronized in the fibrillated resin (G) can be directly used as the reinforcing material (D) containing the cellulose nanofiber (F) and the fibrillated resin (G) without undergoing a purification step.

The reinforcing material (D) in the present invention contains the cellulose nanofiber (F), which is obtained by fibrillating cellulose in the fibrillated resin (G), as an essential component, and may contain the fibrillated resin (G) as is. It is possible to add, for example, various resins, additives, organic and inorganic fillers, to the reinforcing material (D), within a range that does not diminish the effect of the present invention. The various resins, additives, and organic and inorganic fillers may be added before or after fibrillation of cellulose. However, among the above, the components that require a impurity removal step such as drying or purification when being compounded with the fiber-reinforced resin (C) later are not preferable since they diminish the effects of the present invention.

When the fibrillated resin (G) has hydroxyl groups, the resin may be a modified fibrillated resin (g) obtained by the reaction with the cyclic polybasic acid anhydride (J). The reinforcing material (D) in the present invention can be used as is without being purified after the step of fibrillating cellulose and the step of modifying the cellulose nanofiber. Since water or a hydrophilic solvent is not used, the reinforcing material (D) exhibits an extremely high degree of affinity with respect to a resin and can be compounded with a diluent resin even if the concentration of the cellulose nanofiber (F) is high.

[Fiber-reinforced resin composite (E)]

The fiber-reinforced resin composite (E) of the present invention contains the fiber-reinforced resin (C), which contains the reinforcing fiber (A) and the matrix resin (B), and the reinforcing material (D). The fiber-reinforced resin composite (E) is obtained by compounding the reinforcing material (D) with the fiber-reinforced resin (C). Moreover, the fiber-reinforced resin composite (E) can also be obtained by compounding the reinforced matrix resin (H), which contains the matrix resin (B) and the reinforcing material (D), with the reinforcing fiber (A). In view of simplicity of production process, a method in which the reinforced matrix resin (H) is produced in advance and then compounded with the reinforcing fiber (A) is preferable.

[Reinforced matrix resin (H)]

The reinforced matrix resin (H) contains the matrix resin (B) and the reinforcing material (D).

Showing a high degree of affinity with respect to the matrix resin (B), the reinforcing material (D) can be mixed with the matrix resin (B) in any method.

The amount of the cellulose nanofiber (F) in the reinforced matrix resin (H) is preferably from 0.1 % by mass to 30% by mass, more preferably from 0.1 % by mass to 20% by mass, and even more preferably from 0.1% by mass to 10% by mass. If the amount is within this range, the viscosity of the reinforced matrix resin (H) becomes relatively low when being compounded with the reinforcing fiber (A), whereby the resin can be easily compounded with the fiber.

[Compounding method]

The fiber-reinforced resin composite (E) is obtained by compounding the reinforcing fiber (A) with the matrix resin (B) and the reinforcing material (D).

The compounding method is not particularly limited as long as the method does not diminish the effects of the present invention, and the composite can also be obtained by compounding the reinforcing material (D) with the fiber-reinforced resin (C). Furthermore, the composite also can be obtained by compounding the reinforcing fiber (A) with the reinforced matrix resin (H) which contains the matrix resin (B) and the reinforcing material (D).

A preferable method for producing the fiber-reinforced resin composite (E) is a method in which a step of obtaining the cellulose nanofiber (F) by micronizing cellulose in the fibrillated resin (G), a step of obtaining the reinforced matrix resin (H) by compounding the reinforcing material (D) which contains the fibrillated resin (G) and the cellulose nanofiber (F) with the matrix resin (B), and a step of obtaining the fiber-reinforced resin composite (E) by compounding the reinforced matrix resin (H) with the reinforcing fiber (A) are performed to form the fiber-reinforced resin composite (E). In this case, by fibrillation of cellulose in the fibrillated resin (G), the cellulose nanofiber (F) is obtained in a state of not being hydrated, and accordingly, the cellulose nanofiber (F) can be compounded with the matrix resin (B) at a high concentration. Moreover, it is better for the reinforced matrix resin (H) to be prepared in advance, since this makes it easy to compound the resin with the reinforcing fiber (A)

When the reinforcing fiber (A) is compounded with the reinforced matrix resin (H) containing the matrix resin (B) and the reinforcing material (D), the matrix resin (B) is mixed with the reinforcing material (D) in advance to form the reinforced matrix resin (H), and then the reinforced matrix resin (H) is compounded with the reinforcing fiber (A). The reinforced matrix resin (H) may be in the form of liquid or viscous liquid.

Examples of methods for compounding the reinforced matrix resin (H) with the reinforcing fiber (A) include kneading, coating, impregnation, injection, compression
and the method may be appropriately seleted according to the form of the reinforcing fiber (A) and the use of the fiber-reinforced resin composite.

When the fiber-reinforced resin (C) is compounded with the reinforcing material (D), the matrix resin (B) in the fiber-reinforced resin (C) needs to be in a state of not being cured yet. The fiber-reinforced resin (C) not being cured yet can be compounded with the reinforcing material (D), by methods such as kneading, impregnation, coating, and injection.

The fiber-reinforced resin composite (E) may be compounded with the matrix resin (B) after the reinforcing fiber (A) is compounded in advance with the reinforcing material (D). The reinforcing fiber (A) can be compounded with the reinforcing material (D) by methods such as kneading, coating, impregnation, injection, and compression. The resultant is compounded with the matrix resin (B) by methods such as kneading, coating, impregantion, injection, and compression, whereby the fiber-reinforced resin composite (E) can be obtained.

When the cellulose nanofiber (F) of the present invention is the modified cellulose nanofiber (F1), a step of obtaining the cellulose nanofiber (F) by means of micronizing cellulose in the fibrillated resin (G), a step of obtaining the modified cellulose nanofiber (F1) by reacting the cyclic polybasic acid anhydride (J) with the cellulose nanofiber (F) in the fibrillated resin (G) to cause a reaction between hydroxyl groups contained in the cellulose nanofiber (F) and the cyclic polybasic acid anhydride (J), and a step of obtaining the reinforced matrix resin (H) by compounding the reinforcing material (D) containing the fibrillated resin (G) or the modified fibrillated resin (K), which is obtained by modifying the fibrillated resin (G) with the cyclic polybasic acid anhydride (J), and the modified cellulose nanofiber (F1) with the matrix resin (B), are performed, and the reinforced matrix resin (H) is compounded with the reinforcing fiber (A), whereby the fiber-reinforced resin composite (E) can be obtained.

[Amount of reinforcing material (D) mixed in]

In the fiber-reinforced resin composite (E), the ratio between the reinforcing material (D) and the matrix resin (B) can be arbitrarily set within a range that does not diminish the effects of the present invention. Provided that the total amount of the matrix resin (B) and the reinforcing material (D) is 100 parts by mass, the amount of the cellulose nanofiber (F) is from 0.1% by mass to 30% by mass, preferably from 0.1% by mass to 20% by mass, and even more preferably from 0.1% by mass to 10% by mass.

[Other additives]

The fiber-reinforced resin composite (E) may contain various conventionally known additives based on the use thereof, within a range that does not diminish the effects of the present invention. Examples of the additives include a hydrolysis inhibitor, a colorant, a flame retardant, an antioxidant, a polymerization initiator, a polymierzation inhibitor, a UV absorber, an antistatic agent, a lubricant, a release agent, a deafomer, a leveling agent, a light stabilizer (for example, hindered amine), an antioxidant, an inorganic filler, an organic filler.

The fiber-reinforced resin composite (E) of the present invention can be used as a molding material, a coating material, a paint material, and an adhesive.

[Molding method]

Mehtods for molding a molded article relating to the resin composition of the present invention are not particularly limited. For producing plate-like products, extrusion molding is generally used. However, the products can also be produced by plane press. In addition, profile extrusion molding, blow molding, compression molding, vacuum molding, injection molding can be used for example. producing film-like products, melt extrusion and solution casting can be used, and when melt extrusion is used, examples of the method include inflation film molding, cast molding, extrusion lamination molding, calendar molding, sheet molding, fiber molding, blow molding, injection molding, rotational molding, coating molding.
Further, in the case of a resin to be cured by actinic energy rays, molded articles can be produced using various curing methods that use actinic energy rays. Particularly, when a thermoseting resin is used as a main component of the matrix resin (B), examples of the molding method include a method of making a molding material into a prepreg and pressing and heating it by means of pressing or autoclaving. The examples also include Resin Transfer Molding (RTM), Vacuum assist Resin Transfer Molding (VaRTM), lamination molding, hand lay-up molding.

[Use]

The fiber-reinforced resin composite of the present invention can be preferably used for various purposes. For example, the composite can be used for parts of industrial machines, parts of general machines, parts of automoviles, railways, and vehicles, space and aircraft-related parts, electronic and electrical parts, building materials, members for containers and package, daily supplies, sport and leisure equipment, housing members for wind power generation, but the use of the composite is not limited to these.

Examples

Hereinafter, the embodiments of the present invention will be described in more detail, but the present invention is not limited thereto. Moreover, "part(s)" and "%" are expressed in terms of mass unless otherwise specified.

[Production of reinforcing material]

(Production example 1) Production of reinforcing material 1

(Synthesis of polyester-based resin 1)

758.2 parts of diethylen glycol (7.14 mol, fed at a molar ratio of 0.53), 652.6 parts of adipic acid (4.47 mol, fed at a molr ratio of 0.33), 183.9 parts of maleic anhydride (1.88 mol, fed at a molar ratio of 0.14) were put in a 2 L glass flask equipped with a nitrogen gas inlet pipe, a reflux condenser, and a stirrer, and heating of the mixture was started under a nitrogen gas flow. At an internal temperature of 200°C, a dehydration condensation reaction was performed by a conventional method. As soon as the acid value became 13 KOH mg/g, the product was cooled to 150°C, and 2,6-di-tert-butyl-p-cresol was added thereto at a concentration of 100 ppm based on the mass of the raw materials fed. The resultant was then cooled to the room temperature, thereby obtaining a polyester-based resin 1 having an acid value of 13 KOH mg/g, a hydroxyl value of 89 KOH mg/g, and an ester group concentration of 9.1 mmol/g.
Herein, the acid value, hydroxyl value, and ester group concentration were measured by the following method.

(Method for measuring acid value of polyester-based resin)

33 g of potassium hydroxide as a special grade reagent was weighed and put in a 500 ml beaker, and 150 ml of ion-exchange water was slowly added thereto for cooling (KOH solution). A half of a 5 L container was filled with industrial methanol, and the KOH solution was slowly transferred to the container while being mixed with the methanol. Industrial methanol was further added slowly thereto to yield a total amount of 5 L (0.1 mol of alcoholic potassium hydroxide solution).
0.1 g of oxalic acid as a special grade reagent was weighed and put in a 100 ml conical Erlenmeyer flask, and 30 cc of ion-exchange water was added thereto for dissolution. Several drops of 1% phenolphthalein indicator were added thereto, and titration was performed using the 0.1 mol of alcoholic potasium hydroxide solution to calculate a titer by the following Expression (3).

$$\text{Titer} = \text{mass of oxalic acid (g)} \times 1{,}000/[\text{titration (ml)} \times 6.3] \cdots (3)$$

1 g of a sample was collected and put in a 100 ml conical Erlenmeyer flask, 30 g of a neutral solution (obtained by mixing toluene with methanol at a ratio of 7:3 and neutralized with a 0.1 mol of alcoholic potassium hydroxide solution by using phenolphthalein as an indicator) containing a mixture of toluene and methanol was added thereto, and the resultant was stirred with a stirrer. Thereafter, sevral drops of 1% phenolphthalein indicator diluted with ethanol were added thereto, followed by stirring. Subsequently, titration was performed using 0.1 mol alcoholic potassium hydroxide solution, and an acid value was calculated by the following Expression (4).

$$\text{Acid value} = \text{titration amount (ml)} \times \text{titer} \times 5.611/\text{mass of sample (g)} \cdots (4)$$

(Measurement of hydroxyl value of polyester-based resin)

A terminal hydroxyl value was obtained from the terminal structure and the area ratio among the respective peaks derived from ester bonds that are observed in a 13C-NMR Spectrum. As the measurement instrument, JNM-LA300 manufactured by JEOL LTD. was used, and by adding 10 mg of Cr(acac)3 as a shiftless relaxation reagent to 10 wt% of a deuterated chloroform solution containing the sample, quantative measurement by 13C-NMR was performed by means of gate decoupling. Integration was performed 4,000 times.

(Method for calculating concentration of ester group)

The concentration of ester groups was calculated by the following Expression (5).

$$\text{Concentration of ester groups (mmol/g)} = \text{amount of generated ester groups (mol)}/[\text{amount of fed monomer (wt)} - \text{amount of generated water (wt)}] \times 1{,}000 \cdots (5)$$

(Fibrillation of cellulose)

600 parts by mass of the polyester-based resin 1 and 400 parts by mass of a cellulose powder product "KC FLOCK W-50GK" manufactured by NIPPON PAPER INDUSTRIES CO., LTD. CHEMICAL DIVISION were pressurized and kneaded for 600 minutes at 60 rpm by using a pressurizing kneader (DS1-5GHH-H) manufactured by Moriyama Manufacturing Co., Ltd. to perform micronization treatment on cellulose, thereby obtaining a master batch 1. As a result of observing the obtained master batch 1 with a scanning electron microscope, it was confirmed that the cellulose fiber of pulp was fragmented to have a diamter of tens-of-nanometer. The obtained master batch 1 was taken as a reinforcing material 1 for a fiber-reinforced resin composite containing cellulose nanofiber.

(Production example 2) Production of reinforcing material 2

(Synthesis of polyester-based resin 2)

590.9 parts (9.52 mol) of ethylene glycol, 700.5 parts (7.00 mol) of succinic anhydride, and 274.6 parts (2.80 mol) of maleic anhydride were put in a 2 L glass flask equipped with a nitrogen gas inlet pipe, a reflux condenser, and a stirrer, and heating of the mixture was started under a nitrogen gas flow. At an internal temperature of 200°C, a dehydration condensation reaction was performed by a conventional method. As soon as the acid value became 65 KOH mg/g, the product was cooled to 150°C, and 2,6-di-tert-butyl-p-cresol was added thereto at a concentration of 100 ppm based on the mass of the raw materials fed. The resultant was then cooled to the room temperature, thereby obtaining a polyester-based resin 2 having an acid value of 65 KOH mg/g, a hydroxyl value of 60 KOH mg/g, and an ester group concentration of 12.6 mmol/g.

(Fibrillation of cellulose)

600 parts by mass of the polyester-based resin 2 and 400 parts by mass of a cellulose powder product "KC FLOCK W-50GK" manufactured by NIPPON PAPER INDUSTRIES CO., LTD. CHEMICAL DIVISION were pressurized and kneaded for 850 minutes at 60 rpm by using a pressurizing kneader (DS1-50HH-H) manufactured by Moriyama

Manufacturing Co., Ltd. to perform micronization treatment on cellulose, thereby obtaining a master batch 2. As a result of observing the obtained master batch 2 with a scanning electron microscope, it was confirmed that the cellulose fiber of pulp was fragmented to have a diamter of tens-of-nanometer. The obtained master batch 2 was taken as a reinforcing material 2 for a fiber-reinforced resin composite containing cellulose nanofiber.

(Example 1) Production of fiber-reinforced resin composite 1

100 parts by mass of an epoxy resin "EPICLON 850S" manufactured by DIC Corporation was mixed with 1 part by mass of the reinforcing material 1. Neomixer stirring blade 4-2.5 model manufactured by PRIMIX Corporation was mounted on a stirring instrument Labolution manufactured by the same company, and the above mixture was stirred with this instrument for 5 minutes at a rotation frequency of 12,000. 32 parts by mass of Laromin C260 manufactured by BASF was added thereto as a curing agent, followed by stirring, thereby obtaining a reinforced matrix resin 1. The content of cellulose nanofiber in the reinforced matrix resin 1 was 0.3% by mass. After defoaming, PYROFIL Cloth TR-3110-MS (230 mm x 230 mm) as carbon fiber manufactured by Mitsubishi Rayon Co., Ltd. was impregnated with the reinforced matrix resin 1, in a mold (230 mm x 230 mm x 1.6 mm) that had been heated to 50°C. The above operation was repeated 8 times to laminate 8 layers of carbon fiber.

The mold was closed, pressurized and heated for 60 minutes at 80°C and a surface pressure of 1 MPa, and then was pressurized and heated for 3 hours at 150°C and a surface pressure of 1 MPa, thereby obtaining a molded article 1 of the fiber-reinforced resin composite 1. The thickness of the molded article was 1.6 mm.

(Bending strength test)

The molded article 1 obtained as above was subjected to a bending strength test described below, based on JIS-K-7074.

From the molded article 1, test pieces having a width of 15 mm and a length of 100 mm were cut along the carbon cloth weaves by using a diamond cutter. Thereafter, by using a multi-purpose tester manufactured by Instron Corporation, a bending test was performed five times at a span of 80 mm and a test speed of 5 mm/min, in an atmosphere of a temperature of 23°C and a humidity of 50%, by a three-point bending method. The average of maximum stress was taken as a bending strength.

The bending strength of the molded article 1 was 840 MPa.

(Example 2) Production of fiber-reinforced resin composite 2

A fiber-reinforced resin composite 2 and a molded article 2 of the fiber-reinforced resin composite 2 were obtained in the same manner as in Example 1, except that the amount of the reinforcing material 1 was changed to 1.67 parts by mass from 1 part by mass.

The bending strength of the molded article 2 was 860 MPa.

(Example 3) Production of fiber-reinforced resin composite 3

A fiber-reinforced resin composite 3 and a molded article 3 of the fiber-reinforced resin composite 3 were obtained in the same manner as in Example 1, except that the amount of the reinforcing material 1 was changed to 3.38 parts by mass from 1 part by mass.

The bending strength of the molded article 3 was 900 MPa.

(Example 4) Production of fiber-reinforced resin composite 4

A fiber-reinforced resin composite 4 and a molded article 4 of the fiber-reinforced resin composite 4 were obtained in the same manner as in Example 1, except that the amount of the reinforcing material 1 was changed to 10.7 parts by mass from 1 part by mass.

The bending strength of the molded article 4 was 970 MPa.

(Comparative example 1) Production of comparative fiber-reinforced resin 1

A comparative fiber-reinforced resin 1 and a comparative molded article 1 of the comparative fiber-reinforced resin 1 were obtained in the same manner as in Example 1, except that the reinforced material 1 was not mixed in (content of cellulose nanofiber of 0%).

The bending strength of the comparative molded article 1 was 740 MPa.

(Comparative example 2) Production of cellulose nanofiber-containing comparative fiber-reinforced resin 2

4 parts by mass of ethanol was added to 4 parts by mass of "CELISH KY-100G" as cellulose nanofiber manufactured by DAICEL FINECHEM LTD., and the resultant was stirred and then was subjected to suction filtration. Ethanol was added to the obtained wet cake of cellulose nanofiber to adjust the solid concent thereof to 1%, and the resultant was treated with ultrasonic waves. 40 parts by mass of the turbid ethanol solution (solid content of 1%) containing celulose nanofiber and 100 parts by mass of an epoxy resin "EPICLON 850S" manufactured by DIC Corporation were stirred for 5 mimutes at a rotation frequency of 12,000 by using an instrument obtained by mounting a Neomixer stirring blade 4-2.5 model manufactured by PRIMIX Corporation on a stirring instrument Revolution manufactured by the same company. The resin treated as the above process was treated in a vacuum drying furnace at 90°C until volatile components are removed. Subsequently, 32 parts by mass of Laromin C260 as a curing agent manufactured by BASF was added thereto, followed by stirring, thereby obtaining a comparative matrix resin 2 containing 0.3% of cellulose nanofiber.

After defoaming, PYROFIL Cloth TR-3110-MS (230 mm x 230 mm) as carbon fiber manufactured by Mitsubishi Rayon Co., Ltd. was impregnated with the comparative matrix resin 2, in a mold (230 mm x 230 mm x 1.6 mm) that had been heated to 50°C. The above operation was repeated 8 times to laminate 8 layers of carbon fiber.

The mold was closed, pressurized and heated for 60 minutes at 80°C and a surface pressure of 1 MPa, and then was pressurized and heated for 3 hours at 150°C and a surface pressure of 1 MPa, thereby obtaining a comparative molded article 2 of the comparative fiber-reinforced resin 2. The thickness of the molded article was 1.6 mm.

The bending strength of the comparative molded article 2 was 790 MPa.

(Comparative example 3) Comparative fiber-reinforced resin 3

A gel-like comparative matrix resin 3 containing 0.5% of cellulose nanofiber was obtained in the same manner as in Comparative example 2, except that the amount of the turbid ethanol solution (solid content of 1%) containing cellulose nanofiber was changed to 66 parts from 40 parts by mass.

An attempt was made to impregante the carbon fiber with the comparative matrix resin 3 as in Comparative example 2. However, the carbon fiber cloth failed to be impregnated with the matrix resin 3, and a fiber-reinforced resin and a molded article could not be obtained.

(Example 5) Production of fiber-reinforced resin composite 5

100 parts by mass of a vinyl ester resin "DICLITE UE-3505" manufactured by DIC Corporation was mixed with 2.59 parts by mass of the reinforcing material 2, and the resultant was stirred for 5 minutes at a rotation frequency of 8,000 by using an instrument obtained by mounting a Neomixer stirring blade 4-2.5 model manufactured by PRIMIX Corporation on a stirring instrument Revolution manufactured by the same company. 1 part by mass of Kayacarbon AIC-75 as a curing agent manufactured by Kayaku Akzo Corporation was added thereto, followed by stirring, thereby obtaining a reinforced matrix resin 5 (content of cellulose nanofiber in the reinforced matrix resin 5 was 1% by mass). After defoaming, Torayca Cloth CO6644-B (230 mm x 230 mm) as carbon fiber manufactured by TORAY INDUSTRIES, INC. was impregnated with the reinforced matrix resin 5, in a mold (230 mm x 230 mm x 2 mm) that had been heated to 30°C. The above operation was repeated 5 times to laminate 5 layers of carbon fiber.

The mold was closed, pressurized and heated for 15 minutes at 125°C and a surface pressure of 5 MPa, thereby obtaining a molded article 5 of the fiber-reinforced resin composite 5. The thickness of the molded article 5 was 2.0 mm.

The bending strength of the molded article 5 was 570 MPa.

(Example 6) Production of fiber-reinforced resin composite 6

A fiber-reinforced resin composite 6 and a molded article 6 of the fiber-reinforced resin composite 6 were obtained (the content of cellulose nanofiber in a reinforced matrix resin 6 was 5% by mass) in the same manner as in Example 5, except that the amount of the reinforcing material 2 was changed to 14.43 parts by mass from 2.59 parts by mass.

The bending strength of the molded article 6 was 640 MPa.

(Example 7) Production of fiber-reinforced resin composite 7

A fiber-reinforced resin composite 7 and a molded article 7 of the fiber-reinforced resin composite 7 were obtained (the content of cellulose nanofiber in a reinforced matrix resin 7 was 10% by mass) in the same manner as in Example 5, except that the amount of the reinforcing material 2 was changed to 33.67 parts by mass from 2.59 parts

by mass.
The bending strength of the molded article 7 was 680 MPa.

(Comparative example 4) Production of comparative fiber-reinforced resin 4

A Comparative fiber-reinforced resin 4 (contient of cellulose nanofiber of 0%) and a comparative molded article 4 of the comparative fiber-reinforced resin 4 were obtained in the same manner as in Example 5, except that the reinforcing material 2 was not mixed in.
The bending strength of the comparative molded article 4 was 540 MPa.

(Comparative example 5) Production of comparative fiber-reinforced resin 5

102 parts of the turbid ethanol solution (solid content of 1%) containing cellulose nanofiber described in Comparative example 2 was dried in a vacuum drying furnace at 90°C until there was no change in the weight. The resultant was added to 100 parts by mass of a vinyl ester resin "DICLITE UE-3505" manufactured by DIC Corporation and stirred for 5 minutes at a rotation frequency of 8,000 by using a stirring instrument Revolution manufactured by PRIMIX Corporation. Thereafter, 1 part by mass of Kayacarbon AIC-75 as a curing agent manufactured by Kayaku Akzo Corporation was added thereto, and was followed by stirring. However, cellulose nanofiber was poorly dispersed in the resin, so molding could not be performed.

(Example 8) Production of fiber-reinforced resin composite 8

100 parts by mass of a vinyl ester resin "DICLITE UE-3505" manufactured by DIC Corporation was mixed with 2.59 parts by mass of the reinforcing material 1, and the resultant was stirred for 5 minutes at a rotation frequency of 8,000 by using an instrument obtained by mounting a Neomixer stirring blade 4-2.5 model manufactured by PRIMIX Corporation on a stirring instrument Revolution manufactured by the same company. 1 part by mass of Kayacarbon AIC-75 as a curing agent manufactured by Kayaku Akzo Corporation was added thereto, and was followed by stirring, thereby obtaining a reinforced matrix resin 8 (content of cellulose nanofiber in the reinforced matrix resin 8 was 1% by mass).
After defoaming, MC 450A (230 mm x 230 mm) as glass fiber manufactured by Nitto Boseki Co., Ltd. was impregnated with the reinforced matrix resin 8, in a mold (230 mm x 230 mm x 1.6 mm) that had been heated to 30°C. The above operation was repeated twice to laminate 2 layers of glass fiber.
The mold was closed, pressurized and heated for 15 minutes at 125°C and a surface pressure of 1 MPa, thereby obtaining a molded article 8 of the fiber-reinforced resin composite 8. The thickness of the molded article 8 was 1.6 mm.
The bending strength of the molded article 8 was 233 MPa.

(Comparative example 6) Production of comparative fiber-reinforced resin 6

A comparative fiber-reinforced resin 6 and a comparative molded article 6 of the comparative fiber-reinforced resin 6 were obtained in the same manner as in Example 8, except that the reinforcing material 1 was not mixed in.
The bending strength of the comparative molded article 6 was 208 MPa.

(Comparative example 7) Production of comparative fiber-reinforced resin 7

102 parts of the turbid ethanol solution (solid content of 1%) containing cellulose nanofiber described in Comparative example 2 was dried in a vacuum drying furnace at 90°C until there was no change in the weight. The resultant was added to 100 parts by mass of a vinyl ester resin "DICLITE UE-3505" manufactured by DIC Corporation and was stirred for 5 minutes at a rotation frequency of 8,000 by using a stirring instrument Revolution manufactured by PRIMIX Corporation. Thereafter, 1 part by mass of Kayacarbon AIC-75 as a curing agent manufactured by Kayaku Akzo Corporation was added thereto, and was followed by stirring. However, cellulose nanofiber was poorly dispersed in the resin, so molding could not be performed.

(Comparative example 8) Production of comparative fiber-reinforced resin 8

10.2 parts by weight of "CELISH KY-100G" manufactured by DAICEL FINECHEM LTD. was dilluted 10-fold with distilled water, and the resultant was freezed using dry ice and then dried using a lyophilizer until there was no change in the weight. 1.02 parts by weight of the solid content obtained in this manner was added to 100 parts by mass

of a vinyl ester resin "DICLITE UE-3505" manufactured by DIC Corporation. The resultant was stirred for 5 minutes at a rotation frequency of 8,000 by using a stirring instrument Revolution manufactured by PRIMIX Corporation,and then 1 part by mass of Kayacarbon AIC-75 as a curing agent manufactured by Kayaku Akzo Corporation was added thereto, and was followed by stirring. However, the viscosity rapidly increased during stirring, so cellulose nanofiber did not disperse. The obtained undispersed resin exhibited poor permeability with respect to glass fiber, and molding could not be performed.

The results of Examples 1 to 8 and Comparative examples 1 to 7 are shown in Tables 1 to 3.

[Table 1]

| Carbon fiber-reinforced resin composite (epoxy resin) | Amount of cellulose nanofiber (% by weight) | Bending strength (MPa) |
|---|---|---|
| Example 1 | 0.3% | 840 |
| Example 2 | 0.5% | 860 |
| Example 3 | 1.0% | 900 |
| Example 4 | 3.0% | 970 |
| Comparative example 1 | 0% | 740 |
| Comparative example 2 | 0.3% | 790 |
| Comparative example 3 | 0.5% | Failure to molding |

[Table 2]

| Carbon fiber-reinforced resin composite (vinyl ester resin) | Amount of cellulose nanofiber (% by weight) | Bending strength (MPa) |
|---|---|---|
| Example 5 | 1.0% | 570 |
| Example 6 | 5.0% | 640 |
| Example 7 | 10.0% | 680 |
| Comparative example 4 | 0% | 540 |
| Comparative example 5 | 1.0% | Failure to molding |

[Table 3]

| Glass fiber-reinforced resin composite | Amount of cellulose nanofiber (% by weight) | Bending strength (MPa) |
|---|---|---|
| Example 8 | 1.0% | 233 |
| Comparative example 6 | 0% | 208 |
| Comparative example 7 | 1.0% | Failure to molding |
| Comparative example 8 | 1.0% | Failure to molding |

(Production example 3) Production of reinforcing material 3 (modified cellulose nanofiber)

82.9 g of the master batch 1 obtained in Production example 1 and 47.1 g of methyl tetrahydrophthalic anhydride (manufactured by DIC Corporation, EPICLON B-570H) were put in a 200 ml decomposition-type kneader manufactured by YOSHIDA SEISAKUSHO CO., LTD. and were reacted for 6 hours at 60 rpm while the jacket temperature was controlled to be at 130°C, thereby obtaining a modified cellulose nanofiber composition 1. As a result of observing the obtained modified cellulose nanofiber composition 1 with a scanning electron microscope, the diameter of the modified cellulose nanofiber was confirmed to be tens-of-nanometer.

A degree of substitution (DS) of the modified cellulose nanofiber was measured to be 0.24. The obtained modified cellulose nanofiber composition 1 was taken as a reinforcing material 3 for a fiber-reinforced resin composite containing modified cellulose nanofiber.

<Calculation of degree of substitution (DS) of modified cellulose nanofiber>

A degree of substitution (DS) of the modified cellulose nanofiber indicates a molar number of reacted polybasic acid anhydride per 1 mol of a glucose unit in the modified cellulose nanofiber.

The degree of substitution (DS) was measured by the following method.

10 g of the modified cellulose nanofiber composition 1 was put in a 200 ml conical flask, and 100 g of acetone was added thereto to perform dispersion. The resultant was filtered, and the modified cellulose nanofiber on the filter paper was washed with acetone. The modified cellulose nanofiber was taken out and dried, thereby obtaining solids of the modified cellulose nanofiber. The solids were pulverized by ABSOLUTE MILL ABS-W manufactured by OSAKA CHEMICAL Co., Ltd. About 0.5 g of the pulverized modified cellulose nanofiber was weighed and put in a 100 ml conical flask, and 15 ml of ethanol and 5 ml of distilled water were added thereto, followed by stirring for 30 minutes at the room temperature. 10 ml of a 0.5 N sodium hydroxide solution was added thereto, a condenser tube was installed in the conical flask, and the solution was stirred for 60 minutes in a hot-water bath at 80°C. Subsequently, the resultant was cooled to the room temperature under stirring. Several drops of an ethanol solution containing 85% of phenolphthalein were added to the obtained mixed solution, and then back titration was performed using a 0.1 N aqueous hydrochloric acid solution to measure the amount of polybasic acid generated by hydrolysis. The degree of substitution (DS) of the modified cellulose nanofiber was calculated by the following expression.

$$DS = X/((Y - X \times M)/162)$$

X: molar number of polybasic acid calculated by back titration
M: molecular weight of polybasic acid anhydride used for modification
Y: measured weight of modified cellulose nanofiber

(Example 9)

100.0 parts by mass of an epoxy resin "EPICLON 850S" manufactured by DIC Corporation was mixed with 5.4 parts by mass of the reinforcing material 3, and the mixture was stirred for 30 minutes at a rotation frequency of 12,000 by using an instrument obtained by mounting Neomixer stirring blade 4-2.5 model manufactured by PRIMIX Corporation on a stirring instrument Revolution manufactured by the same company. The mixture was heated for 3 hours at 110°C. After the resultant was cooled to the room temperature, 32.0 parts by mass of Laromin C260 as a curing agent manufactured by BASF was added thereto, followed by stirring, thereby obtaining a reinforced matrix resin 9. The converted content of the cellulose nanofiber in the resin composition 9 was 1.0% by mass. The converted content of the cellulose nanofiber refers to a value expressed in terms of % by weight that is obtained by dividing the amount of cellulose nanofiber required for producing the modified cellulose nanofiber contained in the reinforced matrix resin 9 by the weight of the reinforced matrix resin. After defoaming, PYROFIL Cloth TR-3110-MS (230 mm x 230 mm) as carbon fiber manufactured by Mitsubishi Rayon Co., Ltd. was impregnated with the reinforced matrix resin 9, in a mold (230 mm x 230 mm x 1.6 mm) that had been heated to 50°C. The above operation was repeated 8 times to laminate 8 layers of carbon fiber.

The mold was closed, pressurized and heated for 60 minutes at 80°C and a surface pressure of 1 MPa, and then was pressurized and heated for 3 hours at 150°C and a surface pressure of 1 MPa, thereby obtaining a molded article 9 of a fiber-reinforced resin composite 9. The thickness of the molded article was 1.6 mm.

As a result of performing the bending strength test in the same manner as in Example 1, the bending strength of the molded article 9 was confirmed to be 967 MPa.

(Example 10) Production of fiber-reinforced composite 10

100 parts by mass of an epoxy resin "EPICLON 850S" manufactured by DIC Corporation was mixed with 1.67 parts by mass of the reinforcing material 1, and the mixture was stirred for 5 minutes at a rotation frequency of 12,000 by using an instrument obtained by mounting Neomixer stirring blade 4-2.5 model manufactured by PRIMIX Corporation on a stirring instrument Revolution manufactured by the same company. 32 parts by mass of Laromin C260 as a curing agent manufactured by BASF was added thereto, and was followed by stirring, thereby obtaining a reinforced matrix resin 10. The content of cellulose nanofiber in the reinforced matrix resin 10 was 0.5% by mass. After defoaming, single-direction carbon fiber with a product number of BHH-48K40SW (cut in 230 mm in the fiber direction, product width of 40 mm) manufactured by SAKAI OVEX CO., LTD. that has a yarn number of 48K (4,800 strands), a carbon fiber diameter of 6 μm, and a width of 40 mm was impregnated with the reinforced matrix resin 10, in a mold (230 mm x 40 mm x 2 mm) that had been heated to 50°C. The above operation was repeated 24 times to laminate 24 layers of carbon fiber.

The mold was closed, pressurized and heated for 60 minutes at 80°C and a surface pressure of 1 MPa, and then was pressurized and heated for 3 hours at 150°C and a surface pressure of 1 MPa, thereby obtaining a molded article 10 of a fiber-reinforced resin composite 10 reinforced with carbon fiber only in one direction. The thickness of the molded article was 2 mm.
By performing the same operation as the bending test method, the molded article was cut so that the length in the carbon fiber direction became 100 mm, and the bending strength test was performed in a direction in parallel with the carbon fiber. The bending strength of the molded article 10 was 945 MPa.

(Example 11) Production of fiber-reinforced composite 11

A fiber-reinforced resin composite 11 and a molded article 11 of the fiber-reinforced resin composite 11 were obtained in the same manner as in Example 10, except that the amount of the reinforcing material 1 was changed to 3.38 parts by mass (content of cellulose nanofiber in a reinforced matrix resin 11 was 1% by mass) from 1 part by mass.
As a result of measuring the bending strength in the same manner as in Example 10, the bending strength of the molded article 11 was confirmed to be 1,009 MPa.

(Example 12) Production of fiber-reinforced composite 12

A fiber-reinforced resin composite 12 and a molded article 12 of the fiber-reinforced resin composite 12 were obtained in the same manner as in Example 10, except that the amount of the reinforcing material 1 was changed to 5.14 parts by mass (content of cellulose nanofiber in a reinforced matrix resin 11 was 1.5% by mass) from 1 part by mass.
As a result of measuring the bending strength in the same manner as in Example 10, the bending strength of the molded article 12 was confirmed to be 1,036 MPa.

(Comparative example 9) Production of comparative fiber-reinforced resin 9

A comparative fiber-reinforced resin 9 and a comparative molded article 9 of the comparative fiber-reinforced resin 9 were obtained in the same manner as in Example 10, except that the reinforcing material 1 was not mixed in (content of cellulose nanofiber of 0%).
As a result of measuring the bending strength in the same manner as in Example 10, the bending strength of the comparative molded article 9 was confirmed to be 865 MPa.
The results of Examples 10 to 12 and Comparative example 9 are shown in Table 4.

[Table 4]

| Single-direction carbon fiber-reinforced resin composite (epoxy resin) | Amount of cellulose nanofiber (% by weight) | Bending strength (MPa) |
|---|---|---|
| Example 10 | 0.5% | 945 |
| Example 11 | 1.0% | 1009 |
| Example 12 | 1.5% | 1036 |
| Comparative example 9 | 0% | 865 |

(Example 13) Production of fiber-reinforced composite 13

0.3 parts by mass of a 6% cobalt naphthenate solution was added to 100 parts by mass of an unsaturated polyester resin "SUNDHOMA FG-283" manufactured by DH Material inc., and was followed by stirring, and the resultant was mixed with 2.6 parts by mass of the reinforcing material 1 and stirred for 5 minutes at a rotation frequency of 8,000 by an instrument obtained by mounting a Neomixer stirring blade 4-2.5 model manufactured by PRIMIX Corporation on a stirring instrument Revolution manufactured by the same company. 1 part by mass of Permek N as a curing agent manufactured by NOF Corporation was added thereto, and was followed by stirring, thereby obtaining a reinforced matrix resin 13 (the content of cellulose nanofiber in the reinforced matrix resin 13 was 1% by mass).
After defoaming, MC450A (230 mm x 230 mm) as glass fiber manufactured by Nitto Boseki Co., Ltd. was impregnated with the reinforced matrix resin 13 by means of a hand lay-up method (a size of about 200 mm x 200 mm), on a glass plate (250 mm x 250 mm) having undergone release treatment. The above operation was repeated three times to laminate three layers of glass fiber.
The resultant was left as is for 24 hours at the room temperature so as to be cured, and then was subjected to

after-cure for 5 hours in a drying furnace at 80°C, thereby obtaining a molded article 13 of a fiber-reinforced resin composite 13. The thickness of the molded article 13 was about 2.5 mm.

The bending strength of the molded article 13 was 170 MPa.

(Comparative example 10) Production of comparative fiber-reinforced resin 10

A comparative fiber-reinforced resin 10 and a comparative molded article 10 of the comparative fiber-reinforced resin 10 were obtained in the same manner as in Example 13, except that the reinforcing material 1 was not mixed in (content of cellulose nanofiber of 0%).

The bending strength of the comparative molded article 10 was 150 MPa.

(Production example 4) Production of reinforcing material 4

(Synthesis of moidfied epoxy resin 1)

1,200 g of EPICLON 830 (bisphenol F-type epoxy resin) manufactured by DIC Corporation, 191 g of Bis-TMA (dimethylol propionic acid), and 0.4 g of TPP (triphenylphosphine) as a reaction catalyst so as to produce a concentration of 300 ppm were put in a four-necked glass flask equipped with a thermometer, a stirrier, a nitrogen inlet pipe, and a condenser tube, and the mixture was reacted for 3 hours at 140°C. The product was cooled to the room temperature, thereby obtaining a modified epoxy resin 1 having an acid value of 1 mg KOH/g or less and a hydroxyl value of 169 mg KOH/g.

(Measurement of acid value of modified epoxy resin)

The acid value indicates the weight (mg) of potassium hydroxide required to neutralize 1 g of the modified epoxy resin, and the unit thereof is mg KOH/g.

The acid value was measured by dissolving the modified epoxy resin in methyl ethyl ketone and performing titration by using 0.1 N of a methanol solution containing potassium hydroxide.

(Measurement of hydroxyl value of modified epoxy resin)

The hydroxyl value indicates the weight (mg) of potassium hydroxide having the same molar number as the molar number of OH groups in 1 g of the modified epoxy resin, and the unit thereof is mg KOH/g.

The hydroxyl value was calculated from the value of the area of a peak derived from the hydroxyl groups in a 13C-NMR spectrum. As the measurement instrument, JNM-LA300 manufactured by JEOL LTD. was used, and by adding 10 mg of Cr(acac)3 as a shiftless relaxation reagent to 10 wt% of a deuterated chloroform solution containing the sample, quantative measurement by 13C-NMR was performed by means of gate decoupling. Integration was performed 4,000 times.

(Fibrillation of cellulose)

450 g of the modified epoxy resin 1 synthesized in Production example 3 and 550 g of a cellulose powder product "KC FLOCK W-50GK" manufactured by NIPPON PAPER INDUSTRIES CO., LTD. CHEMICAL DIVISION were put in a pressurizing kneader (DS1-5GHH-H) manufactured by Moriyama Manufacturing Co., Ltd., and were pressurized and kneaded for 240 minutes at 60 rpm to perform micronization treatment on cellulose, thereby obtaining a master batch 1 as a mixture of the modified epoxy resin 1 and cellulose nanofiber. 0.1 g of the obtained master batch 1 was weighed and suspended in acetone to yield a concentration of 0.1%. The resultant was subjected to dispersing treatment for 20 minutes at 15,000 rpm by using a TK Homomixer A model manufactured by Tokusyukikai Co., Ltd. and spread on glass to dry acetone, and the micronized state of celluose was observed with a scanning electron microscope. It was confirmed that almost all the cellulose had been finely fibrillated such that the length in the short axis direction thereof became shorter than 100 nm. The obtained master batch 3 was taken as a reinforcing material 4 for a fiber-reinforced resin composite containing cellulose nanofiber.

(Example 14) Production of fiber-reinforced resin composite 14

A fiber-reinforced resin composite 14 and a molded article 14 of the fiber-reinforced resin composite 14 were obtained in the same manner as in Example 3, except that 2.44 parts by mass of the reinforcing material 4 was used instead of 3.38 parts by mass of the reinforcing material 1 (this is because the contents of cellulose nanofiber in the

reinforcing materials were different; the content of cellulose nanofiber in the reinforced matrix resin was 1% by mass in both the Example 3 and example 14).

The bending strength of the molded article 14 was 850 MPa.

Industrial Applicability

If the reinforced matrix resin for a fiber-reinforced resin of the present invention is used, cellulose nanofiber can be compounded with the fiber-reinforced resin at a high concentration. Moreover, since the fiber-reinforced resin composite of the present invention has a high strength, the composite can be preferably used for parts of various industrail machines, parts of general machines, parts of automobiles, railways, and vehicles, space and aircraft-related parts, electronic and electrical parts, building materials, members for containers and package, daily supplies, sport and leisure equipment, housing members for wind power generation.

## Claims

**1.** A fiber-reinforced resin composite as a fiber-reinforced resin composite (E) comprising:

a fiber-reinforced resin (C) which contains a reinforcing fiber (A) and a matrix resin (B); and
a reinforcing material (D),
wherein the reinforcing material (D) contains a cellulose nanofiber (F), and the cellulose nanofiber (F) is obtained by micronizing cellulose in a fibrillated resin (G).

**2.** The fiber-reinforced resin composite according to Claim 1,
wherein the cellulose nanofiber (F) is a modified cellulose nanofiber (F1) that is obtained by micronizing cellulose in the fibrillated resin (G) and then reacting the cellulose with a cyclic polybasic acid anhydride (J).

**3.** The fiber-reinforced resin composite according to Claim 1 or 2,
wherein the reinforcing material (D) further contains the fibrillated resin (G) or a modified fibrillated resin (K) that is obtained by modifying the fibrillated resin (G) with the cyclic polybasic acid anhydride (J).

**4.** The fiber-reinforced composite according to any one of Claims 1 to 3,
wherein the reinforcing fiber (A) is a carbon fiber (A1) or a glass fiber (A2).

**5.** A use of a reinforced matrix resin as a reinforced matrix resin (H) for a fiber-reinforced resin composite comprising:

a matrix resin (B); and
a reinforcing material (D),
wherein the reinforcing material (D) contains a cellulose nanofiber (F), and the cellulose nanofiber (F) is obtained by micronizing cellulose in a fibrillated resin (G).

**6.** The use according to Claim 5,
wherein the cellulose nanofiber (F) is a modified cellulose nanofiber (F1) that is obtained by micronizing cellulose in the fibrillated resin (G) and then reacting the cellulose with a cyclic polybasic acid anhydride (J).

**7.** The use according to Claim 5 or 6,
wherein the reinforcing material (D) further contains the fibrillated resin (G) or a modified fibrillated resin (K) obtained by modifying the fibrillated resin (G) with the cyclic polybasic acid anhydride (J).

**8.** A method for producing a fiber-reinforced resin composite, comprising:

a step of obtaining a cellulose nanofiber (F) by micronizing cellulose in a fibrillated resin (G);
a step of obtaining a reinforced matrix resin (H) by compounding a reinforcing material (D) which contains the fibrillated resin (G) and the cellulose nanofiber (F) with a matrix resin (B); and
a step of obtaining a fiber-reinforced resin composite (E) by compounding the reinforced matrix resin (H) with a reinforcing fiber (A).

**9.** A method for producing a fiber-reinforced resin composite, comprising:

a step of obtaining a cellulose nanofiber (F) by micronizing cellulose in a fibrillated resin (G);
a step of obtaining a modified cellulose nanofiber (F1) by reacting hydroxyl groups contained in the cellulose nanofiber (F) with a cyclic polybasic acid anhydride (J) in the fibrillated resin (G);
a step of obtaining a reinforced matrix resin (H) by compounding a matrix resin (B) with a reinforcing material (D) containing the fibrillated resin (G) or a modified fibrillated resin (K) obtained by modifying the fibrillated resin (G) with a cyclic polybasic acid anhydride (J) and a modified cellulose nanofiber (F1); and
a step of obtaining a fiber-reinforced resin composite (E) by compounding the reinforced matrix resin (H) with a reinforcing fiber (A).

**Patentansprüche**

1. Faserverstärktes Harzkomposit als ein faserverstärktes Harzkomposit (E), das umfasst:

ein faserverstärktes Harz (C), welches eine Verstärkungsfaser (A) und ein Matrixharz (B) enthält; und
ein Verstärkungsmaterial (D),
wobei das Verstärkungsmaterial (D) eine Zellulosenanofaser (F) enthält, und die Zellulosenanofaser (F) durch Mikronisieren von Zellulose in einem fibrillierten Harz (G) erhalten ist.

2. Faservestärktes Harzkomposit nach Anspruch 1,
wobei die Zellulosenanofaser (F) eine modifizierte Zellulosenanofaser (F1) ist, die durch Mikronisieren von Zellulose in dem fibrillierten Harz (G) und dann Reagieren der Zellulose mit einem zyklischen mehrwertigen Säureanhydrid (J) erhalten ist.

3. Faserverstärktes Harzkomposit nach Anspruch 1 oder 2,
wobei das Verstärkungsmaterial (D) ferner das fibrillierte Harz (G) oder ein modifiziertes fibrilliertes Harz (K), das durch Modifizieren des fibrillierten Harzes (G) mit dem zyklischen mehrwertigen Säureanhydrid (J) erhalten ist, enthält.

4. Faserverstärktes Komposit nach einem der Ansprüche 1 bis 3,
wobei die Verstärkungsfaser (A) eine Kohlenstofffaser (A1) oder eine Glasfaser (A2) ist.

5. Verwendung eines verstärkten Matrixharzes als ein verstärktes Matrixharz (H) für ein faserverstärktes Harzkomposit, umfassend:

ein Matrixharz (B); und
ein Verstärkungsmaterial (D),
wobei das Verstärkungsmaterial (D) eine Zellulosenanofaser (F) enthält, und die Zellulosenanofaser (F) durch Mikronisieren von Zellulose in einem fibrillierten Harz (G) erhalten ist.

6. Verwendung nach Anspruch 5,
wobei die Zellulosenanofaser (F) eine modifizierte Zellulosenanofaser (F1) ist, die durch Mikronisieren von Zellulose in dem fibrillierten Harz (G) und dann Reagieren der Zellulose mit einem zyklischen mehrwertigen Säureanhydrid (J) erhalten ist.

7. Verwendung nach Anspruch 5 oder 6,
wobei das Verstärkungsmaterial (D) ferner das fibrillierte Harz (G) oder ein modifiziertes fibrilliertes Harz (K), das durch Modifizieren des fibrillierten Harzes (G) mit dem zyklischen mehrwertigen Säureanhydrid (J) erhalten ist, enthält.

8. Verfahren zum Herstellen eines faserverstärkten Harzkomposits, umfassend:

einen Schritt des Erhaltens einer Zellulosenanofaser (F) durch Mikronisieren von Zellulose in einem fibrillierten Harz (G);
einen Schritt des Erhaltens eines verstärkten Matrixharzes (H) durch Compoundieren eines Verstärkungsmaterials (D), welches das fibrillierte Harz (G) und die Zellulosenanofaser (F) enthält, mit einem Matrixharz (B); und
einen Schritt des Erhaltens eines faserverstärkten Harzkomposits (E) durch Compoundieren des verstärkten Matrixharzes (H) mit einer Verstärkungsfaser (A).

**9.** Verfahren zum Herstellen eines faserverstärkten Harzkomposits, umfassend:

einen Schritt des Erhaltens einer Zellulosenanofaser (F) durch Mikronisieren von Zellulose in einem fibrillierten Harz (G);
und einen Schritt des Erhaltens einer modifizierten Zelluloseanofaser (F1) durch Reagieren von Hydroxylgruppen, die in der Zellulosenanofaser (F) enthalten sind, mit einem zyklischen mehrwertigen Säureanhydrid (J) in dem fibrillierten Harz (G);
einen Schritt des Erhaltens eines verstärkten Matrixharzes (H) durch Compoundieren eines Matrixharzes (B) mit einem Verstärkungsmaterial (D), das das fibrillierte Harz (G) oder ein modifiziertes fibrilliertes Harz (K), das durch Modifizieren des fibrillierten Harzes (G) mit einem zyklischen mehrwertigen Säureanhydrid (J) erhalten ist, und eine modifizierte Zellulosenanofaser (F1) enthält; und
einen Schritt des Erhaltens eines faserverstärkten Harzkomposits (E) durch Compoundieren des verstärkten Matrixharzes (H) mit einer Verstärkungsfaser (A).

## Revendications

**1.** Composite de résine renforcée par une fibre comme un composite de résine renforcée par une fibre (E) comprenant :

une résine renforcée par une fibre (C) qui contient une fibre de renforcement (A) et une résine de matrice (B) ; et un matériau de renforcement (D),
dans lequel le matériau de renforcement (D) contient une nanofibre de cellulose (F), et la nanofibre de cellulose (F) est obtenue par micronisation de cellulose dans une résine fibrillée (G).

**2.** Composite de résine renforcée par une fibre selon la revendication 1,
dans lequel la nanofibre de cellulose (F) est une nanofibre de cellulose modifiée (F1) qui est obtenue par micronisation de cellulose dans la résine fibrillée (G) et par réaction subséquente de la cellulose avec un anhydride d'acide polybasique cyclique (J).

**3.** Composite de résine renforcée par une fibre selon la revendication 1 ou 2,
dans lequel le matériau de renforcement (D) contient de plus la résine fibrillée (G) ou une résine fibrillée modifiée (K) qui est obtenue par modification de la résine fribrillée (G) avec l'anhydride d'acide polybasique cyclique (J).

**4.** Composite renforcé par une fibre selon l'une quelconque des revendications 1 à 3,
dans lequel la fibre de renforcement (A) est une fibre de carbone (A1) ou une fibre de verre (A2).

**5.** Utilisation d'une résine de matrice renforcée comme une résine de matrice renforcée (H) pour un composite de résine renforcée par une fibre comprenant :

une résine de matrice (B) ; et
un matériau de renforcement (D),
dans laquelle le matériau de renforcement (D) contient une nanofibre de cellulose (F), et la nanofibre de cellulose (F) est obtenue par micronisation de cellulose dans une résine fibrillée (G).

**6.** Utilisation selon la revendication 5,
dans laquelle la nanofibre de cellulose (F) est une nanofibre de cellulose modifiée (F1) qui est obtenue par micronisation de cellulose dans la résine fibrillée (G) et par réaction subséquente de la cellulose avec un anhydride d'acide polybasique cyclique (J).

**7.** Utilisation selon la revendication 5 ou 6,
dans laquelle le matériau de renforcement (D) contient de plus la résine fibrillée (G) ou une résine fibrillée modifiée (K) obtenue par modification de la résine fibrillée (G) avec l'anhydride d'acide polybasique cyclique (J).

**8.** Procédé de production d'un composite de résine renforcée par une fibre, comprenant :

une étape d'obtention d'une nanofibre de cellulose (F) par micronisation de cellulose dans une résine fibrillée (G) ;
une étape d'obtention d'une résine de matrice renforcée (H) par combinaison d'un matériau de renforcement (D) qui contient la résine fibrillée (G) et la nanofibre de cellulose (F) avec une résine de matrice (B) ; et

une étape d'obtention d'un composite de résine renforcée par une fibre (E) par combinaison de la résine de matrice renforcée (H) avec une fibre de renforcement (A).

**9.** Procédé de production d'un composite de résine renforcée par une fibre, comprenant :

une étape d'obtention d'une nanofibre de cellulose (F) par micronisation de cellulose dans une résine fibrillée (G) ;
une étape d'obtention d'une nanofibre de cellulose modifiée (F1) par réaction de groupes hydroxyle contenus dans la nanofibre de cellulose (F) avec un anhydride d'acide polybasique cyclique (J) dans la résine fibrillée (G) ;
une étape d'obtention d'une résine de matrice renforcée (H) par combinaison d'une résine de matrice (B) avec un matériau de renforcement (D) contenant la résine fibrillée (G) ou une résine fibrillée modifiée (K) obtenue par modification de la résine fibrillée (G) avec un anhydride d'acide polybasique cyclique (J) et une nanofibre de cellulose modifiée (F1); et
une étape d'obtention d'un composite de résine renforcée par une fibre (E) par combinaison de la résine de matrice renforcée (H) avec une fibre de renforcement (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010024413 A
- JP 2005042283 A
- JP 2011006609 A
- JP 2011219571 A
- JP 2011195609 A
- WO 2011115154 A1
- JP 2005239928 A